# EUROPEAN PATENT APPLICATION

(11) **EP 4 800 613 A1**
(43) Date of publication of application: **02.09.2026**
(21) Application number: 25221919.1
(22) Date of filing: 09.12.2025
(51) Int. Cl.: G06Q 10/02, G06Q 10/06, G06Q 10/0631, G08G 5/22, G08G 5/26, G08G 5/32, G08G 5/34, G08G 5/53, G08G 5/55, G08G 5/56, G08G 5/58, G08G 5/72, G06Q 50/40

(54) **INTEGRATED SYSTEM-WIDE CONTINGENCY MANAGEMENT SYSTEM**

(30) Priority: 26.02.2025 US 202519064025
(71) Applicant: The Boeing Company, Arlington, VA 22202 (US)
(72) Inventor: Hardt, Michael, Arlington, 22202 (US); Altun, Arinc, Bedfordshire, Mk43 0AL (GB); Inalhan, Gokhan, Bedfordshire, Mk43 0AL (GB); Xu, Yan, Bedfordshire, Mk43 0AL (GB)
(74) Representative: Witte, Weller & Partner Patentanwälte mbB

(57) **Abstract**

An integrated system-wide contingency management system (ISCMS) (340) detects a contingency event associated with aircraft traffic. The ISCMS (340) determines, using a contingency state model, contingency management actions for one or more flights in a contingency state in connection with the detected contingency event. The ISCMS (340) determines, using a tactical state model, tactical management actions for flights in a tactical state based on the contingency management actions. The ISCMS (340) determines, using a strategic state model, strategic management actions for flights in a strategic state based on the contingency management actions and the tactical management actions. The ISCMS (340) transmits information to trigger the tactical management actions determined for the flights in the tactical state. The ISCMS (340) transmits information to trigger the strategic management actions determined for the flights in the strategic state.

## Description

### FIELD

The present disclosure relates generally to contingency management for aircraft traffic and to an integrated system-wide contingency management system.

### BACKGROUND

Advanced air mobility (AAM) is an emerging system of air transportation that supports the use of aircraft, such as vertical take-off and landing (VTOL) aircraft, remotely piloted aircraft, autonomous aircraft, and/or unmanned or uncrewed ariel vehicles (UAVs), among other examples, to transport people or cargo between locations not typically served by traditional aviation modes. AAM use cases include urban air mobility (UAM), regional air mobility (RAM), cargo delivery, public services, and private or recreational vehicles. UAM involves air transportation of passengers or cargo in an urban area. RAM involves air transportation connecting rural or hard-to-reach areas.

### SUMMARY

An embodiment of the present disclosure provides an integrated system-wide contingency management system (ISCMS), comprising: one or more memories; a contingency state model configured to determine contingency management actions for flights in a contingency state; a tactical state model configured to determine tactical management actions for flights in a tactical state; a strategic state model configured to determine strategic management actions for flights in a strategic state; one or more processors, communicatively coupled to the one or more memories, that are configured to: detect one or more contingency events associated with aircraft traffic including a plurality of flights, determine, using the contingency state model, at least one contingency management action for each of one or more flights in the contingency state in connection with the detected one or more contingency events, determine, using the tactical state model, one or more tactical management actions for each of one or more flights in a tactical state based on at least one of the at least one contingency management action for each of the one or more flights in the contingency state or the detected one or more contingency events, and determine, using the strategic state model, one or more strategic management actions for each of one or more flights in a strategic state based on at least one of the at least one contingency management action for each of the one or more flights in the contingency state, the one or more tactical management actions for each of the one or more flights in the tactical state, or the detected one or more contingency events; and a communication system configured to: transmit, to a flight management system (FMS) of a respective aircraft associated with each flight of the one or more flights in the tactical state, information to trigger the one or more tactical management actions determined for the flight in the tactical state, and transmit, to an FMS of a respective aircraft associated with each flight of the one or more flights in the strategic state, information to trigger the one or more strategic management actions determined for the flight in the strategic state.

Another embodiment of the present disclosure provides an FMS of an aircraft, comprising: one or more memories; and one or more processors, communicatively coupled to the one or more memories, configured to: receive information indicating a tactical management action or a strategic management action, for a flight of the aircraft, based on a contingency management action for another flight of another aircraft; and control the aircraft in accordance with the tactical management action or the strategic management action.

Yet a further embodiment of the present disclosure provides a system, comprising: an ISCMS, comprising: one or more memories; a contingency state model configured to determine contingency management actions for flights in a contingency state; a tactical state model configured to determine tactical management actions for flights in a tactical state; a strategic state model configured to determine strategic management actions for flights in a strategic state; one or more processors, communicatively coupled to the one or more memories, that are configured to: detect one or more contingency events associated with aircraft traffic including a plurality of flights, determine, using the contingency state model, at least one contingency management action for each of one or more flights in the contingency state in connection with the detected one or more contingency events, determine, using the tactical state model, one or more tactical management actions for each of one or more flights in a tactical state based on at least one of the at least one contingency management action for each of the one or more flights in the contingency state or the detected one or more contingency events, and determine, using the strategic state model, one or more strategic management actions for each of one or more flights in a strategic state based on at least one of the at least one contingency management action for each of the one or more flights in the contingency state, the one or more tactical management actions for each of the one or more flights in the tactical state, or the detected one or more contingency events; and a communication system configured to: transmit information indicating a tactical management action determined for a flight in the tactical state, and transmit information indicating a strategic management action determined for a flight in the strategic state; and an FMS of an aircraft configured to: receive the information indicating the tactical management action or the information indicating the strategic management action, and control the aircraft in accordance with the tactical management action or the strategic management action.

The features, functions, and advantages described herein can be achieved independently in various implementations or can be combined in other implementations, further details of which are shown in the drawings and described below.

### BRIEF DESCRIPTION OF THE DRAWINGS

Figs. 1A-1P are diagrams of an example implementation associated with an integrated system-wide contingency management system (ISCMS).
Figs. 2A-2D are diagrams of an example algorithms associated with operations of an ISCMS.
Fig. 3 is a diagram of an example environment in which systems and/or methods described herein may be implemented.
Fig. 4 is a diagram of example components of a device associated with integrated system-wide contingency management.
Fig. 5 is a flowchart of an example process associated with integrated system-wide contingency management.
Fig. 6 is a flowchart of an example process associated with integrated system-wide contingency management.

### DETAILED DESCRIPTION

The following detailed description of example implementations refers to the accompanying drawings. The same reference numbers in different drawings identify the same or similar elements.

An advanced air mobility (AAM) system may involve a highly complex aircraft traffic environment. For example, the aircraft traffic in an AAM environment may be heterogenous, with aircrafts of many different types and sizes that are used for various purposes (e.g., passenger transport, cargo transport, private use, or public services, among other examples). The aircraft traffic in the AAM environment may also be dense, with a large quantity of flights in a relatively small urban area. In order to achieve operational viability of the AAM system, it is important to maximize safety while also maintaining high levels of efficiency. However, balancing safety and efficiency can pose significant challenges given the highly complex aircraft traffic environment, particularly when contingencies or emergencies occur. Existing contingency management approaches focus on automated onboard solutions for individual aircrafts that are tailored to specific failure cases and procedures. Such contingency management approaches, while effective in certain cases, fail to account for broader impacts the contingency events have on the surrounding aircraft traffic as a whole. For example, actions performed by an individual aircraft to resolve a contingency for that aircraft can cause unintended effects on flights of other aircrafts, such as in-air collisions and/or scheduling conflicts. Accordingly, existing contingency approaches are not sufficient to achieve high levels of safety and efficiency when contingency events occur for aircraft traffic.

Some implementations described herein include an integrated system-wide contingency management system (ISCMS). The ISCMS is configured to perform aircraft traffic management using a state-based approach with different models used for traffic categorized in the different states. The ISCMS considers flights in three states: a contingency state, a tactical state, and a strategic state. A flight is in the contingency state if a contingency associated with the flight is detected, a flight is in the tactical state during an in-flight phase of the flight (e.g., the flight is in the air), and a flight is in the strategic state during a pre-flight phase of the flight (e.g., the flight is scheduled, but the aircraft has not yet taken off). ISCMS includes a contingency state model configured to determine contingency management actions for flights in the contingency state, a tactical state model configured to determine tactical management actions for flights in the tactical state, and a strategic state model configured to determine strategic management actions for flights in the strategic state. The ISCMS detects an occurrence of a contingency event associated with aircraft traffic, and identifies any flights in the contingency state in connection with the contingency event. The ISCMS uses the contingency state model to determine a contingency management action for each flight in the contingency state.

In some implementations, the ISCMS triggers an aircraft of a flight in the contingency state to perform the contingency management action determined for the flight and thereby resolve the contingency associated with the flight. The ISCMS then uses the tactical state model to determine tactical management actions for flights in the tactical state based on the contingency management actions for the flights in the contingency state. In some implementations, the tactical state model identifies potential in-air collisions for flights in the tactical state that may result from the flights in the contingency state performing the contingency management action, and the tactical state model determines tactical management actions for the flights in the tactical state in order to prevent the potential in-air collisions. The ISCMS triggers the aircrafts of the flights in the tactical state to perform tactical management actions, thereby preventing in-air collisions due to the contingency management actions performed for the flights in the contingency state. The ISCMS then uses the strategic state model to determine strategic management actions for devices in the strategic state based on the contingency management actions determined for the flights in the contingency state and the tactical management actions determined for the flights in the tactical state.

In some implementations, the strategic management model identifies potential scheduling conflicts for flights in the strategic state (e.g., scheduled flights) due to the contingency management actions performed for the flights in the contingency state and/or the tactical management actions performed for the flights in the tactical state. The ISCMS triggers the strategic management actions to be performed for the flights in the strategic state, thereby resolving the potential scheduling conflicts. The modular, state-based traffic management performed by the ISCMS enables the ISCMS to provide cohesive responses to contingency situations associated with the aircraft traffic that provides prompt resolution of contingency issues in flights while also protecting surrounding traffic and thereby preserving the safety and efficiency of the overall aircraft traffic environment. In this way, the ISCMS is enabled to support the dynamic and complex nature of AAM operations and handle a wide range of contingency scenarios without compromising operational efficiency or safety.

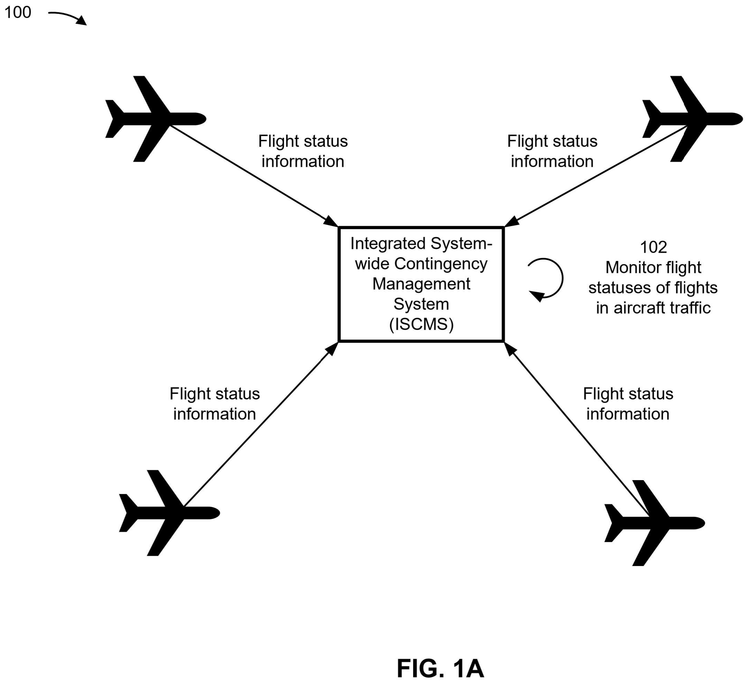

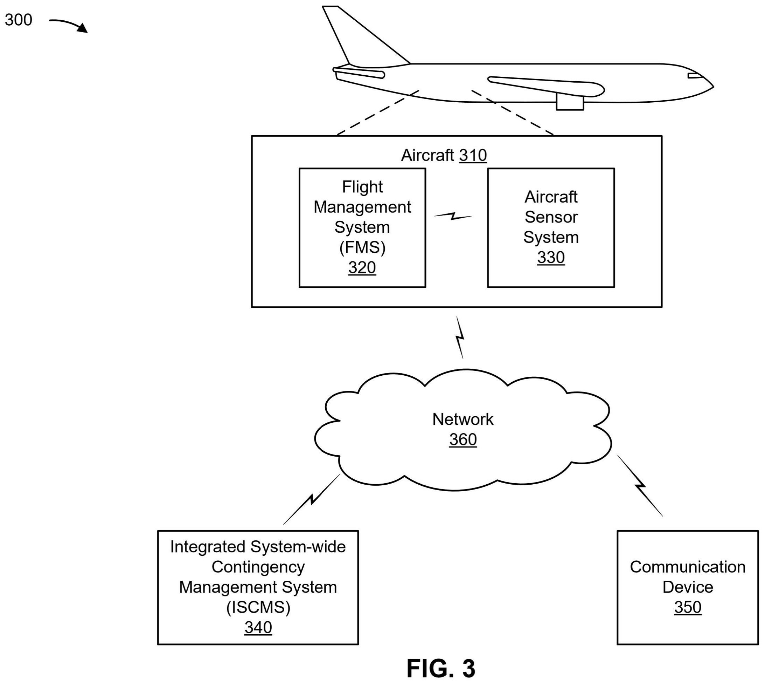

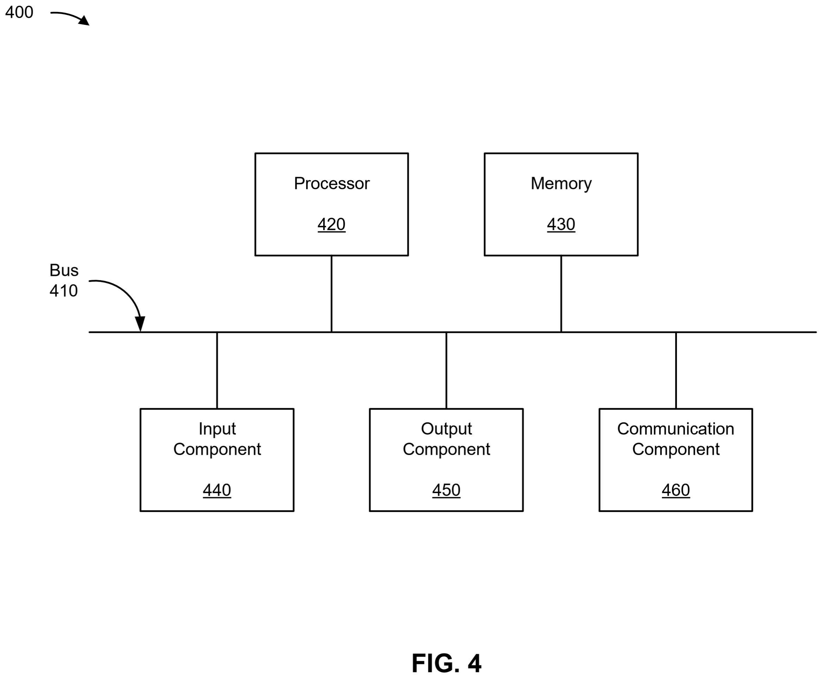

Figs. 1A-1P are diagrams of an example implementation 100 associated with an integrated system-wide contingency management system. As shown in Figs. 1A-1P, example implementation 100 comprises an ISCMS and multiple aircrafts, each including a flight management system (FMS). The ISCMS, the aircrafts, and the FMS are described in more detail below in connection with Fig. 3 and Fig. 4.

The ISCMS considers three distinct states for flights in aircraft traffic (e.g., AAM traffic and/or other aircraft traffic) that are integrated to safely and efficiently manage the aircraft traffic in contingency situations. The three states for the flights include a contingency state, a tactical state, and a strategic state. A flight is considered to be in the contingency state when a contingency event (e.g., an emergency) associated with the flight is detected. A flight is considered to be in the tactical state during an in-flight phase of the flight. A flight is considered to be in the strategic phase during a pre-flight (e.g., pre-takeoff) phase of the flight. The ISCMS includes a contingency state model, a tactical state model, and a strategic state model. For example, the contingency state model, the tactical state model, and the strategic state model may be stored in one or more memories of the ISCMS. The ISCMS uses the contingency state model to determine contingency management actions for resolving contingency events that are detected for flights in the tactical state and the strategic state. The ISCMS uses the tactical state model for implementing in-flight updates (e.g., tactical management actions) for flights in the tactical state to resolve potential conflicts (e.g., due to the contingency management actions) during emergency situations. The ISCMS uses the strategic state model for providing timely updates of the flight schedule (e.g., strategic management actions) for flights in the strategic state in the event of adverse traffic conditions (e.g., due to the contingency management actions and/or the tactical management actions). ISCMS integrates the states based on a state-machine representation to manage the aircraft traffic.

Fig. 1A shows the ISCMS and aircraft traffic that includes flights of multiple aircrafts. A flight refers to one trip (from a starting point to a destination) of an aircraft. Accordingly, each trip of an aircraft from a starting point to a destination is considered a separate flight. A flight of an aircraft includes a pre-flight phase and an in-flight phase. The pre-flight phase of a flight is a time period prior to takeoff of the aircraft for the flight, and the in-flight phase of a flight is a time period between takeoff and landing of the aircraft for the flight. As shown in Fig. 1A, and by reference number 102, the ISCMS monitors flight statuses of the flights in the aircraft traffic. As further shown in Fig. 1A, the aircrafts transmit flight status information associated with the respective flights of the aircrafts. The flight status information transmitted by an aircraft indicates the flight status of the flight of the aircraft. The flight status indicates whether the flight is in the pre-flight phase or the in-flight phase. The ISCMS receives the flight status information, and thereby monitors the flight statuses of the flights of the aircrafts. In some implementations, an FMS of an aircraft transmits the flight status information associated with the flight of the aircraft. In some implementations, the ISCMS receives the flight status information for a flight directly from the aircraft. In this case, a communication system of the ISCMS is configured to communicate with the aircraft (e.g., with the FMS or a communication system of the aircraft) and receive the flight status information directly from the aircraft. In some other implementations, instead of receiving the flight status information for a flight directly from the aircraft, the ISCMS receives the flight status information from a communication device associated with the aircraft, such as a communication device of an operator of the aircraft or a communication device of a service provider associated with the aircraft. In some other implementations, the ISCMS retrieves the flight status information for the flights from one or more databases external to the ISCMS, such as one or more databases maintained by operators or service providers associated with the aircrafts.

In some implementations, the aircrafts periodically transmit the flight status information for the flights. For example, the FMS of an aircraft may be configured to periodically transmit the flight status information at a certain periodicity. In some implementations, the aircrafts transmit the flight status information in response to changes in the flight status for the flights. For example, the FMS of an aircraft may be considered to transmit the flight status information in response the flight status of the flight changing (e.g., from pre-flight to in-flight). In some implementations, the ISCMS stores the flight statuses information for the flights (e.g., in a flight status database) and updates the stored flight statuses when the ISCMS receives or retrieves flight status information indicating changes to the flight statuses of the flights.

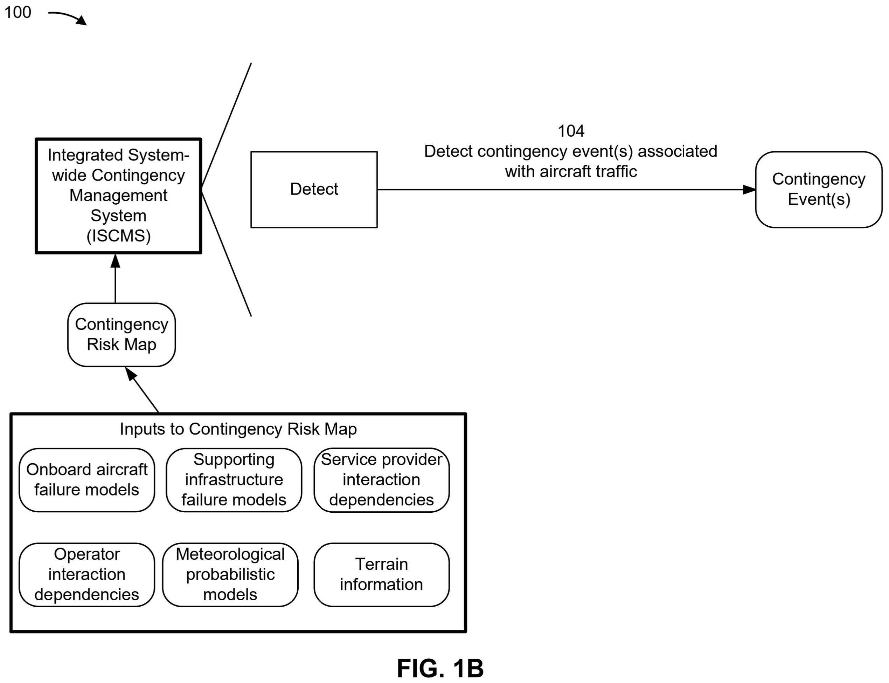

Fig. 1B shows the ISCMS, a contingency risk map, and a set of inputs to the contingency risk map. As shown by Fig. 1B, and by reference number 104, the ISCMS detects one or more contingency events associated with the aircraft traffic. In particular, the ISCMS is configured to detect the occurrence of contingency events associated with the flights included in the aircraft traffic and the occurrence of contingency events associated with infrastructure supporting the aircraft traffic. A contingency event is an emergency situation associated with a particular flight or infrastructure (e.g., a vertiport, an airport, or a communication infrastructure) supporting one or more flights. The ISCMS is configured to detect the occurrence of any contingency events associated with the flights using the contingency risk map. The contingency risk map is a mapping, based on the set of inputs to the contingency risk map, of a flight or at least one individual operation of a flight, to a probability value representing a probability of the occurrence of a contingency event. The ISCMS maintains the contingency risk map based on the set of inputs to the contingency risk map. For example, the ISCMS is configured to generate and update the contingency risk map based on the set of inputs. As shown Fig. 1B, the set of inputs to the contingency risk map includes onboard aircraft failure models for the aircrafts associated with the flights, supporting infrastructure failure models, service provider interaction dependencies, operator interaction dependencies, meteorological probabilistic models, and terrain information. In some implementations, the set of inputs to the contingency risk map may include any combination of one or more of the inputs shown in Fig. 1B.

The ISCMS is configured to perform contingency monitoring for each flight and for the supporting infrastructure using the contingency risk map. In some implementations, the contingency risk map is a grid map with grids representing different probability values, and the ISCMS includes points on the grid map corresponding to various operations of the flight, with each point on the grid map representing the probability of a contingency occurring for a respective operation of the flight. By maintaining the contingency risk map for the flight, the ISCMS monitors the probability of a contingency occurring for each operation of the flight. In a case in which the probability for an operation of the flight exceeds a threshold probability, the ICMS detects a contingency event for the flight. In some implementations, the ISCMS may detect contingency events associated with in-flight operations of a flight in the in-flight phase, and the ISCMS may detect contingency events on the ground (e.g., vehicle/aircraft contingencies, vertiport-related contingencies, and/or weather-related contingencies) for flights in the pre-flight phase. When the ISCMS detects a contingency event associated with a flight, the ISCMS determines that the flight is in a contingency state. In some implementations, when the ISCMS detects a contingency event, the ISCMS determines a severity of the detected contingency event. In some implementations, the ISCMS maintains a separate contingency risk map for each flight. In some implementations, the ISCMS is configured to receive or retrieve the inputs to the contingency risk map from one or more information sources, such as the aircrafts (e.g., the FMSs of the aircrafts) associated with the flights, operators of the aircrafts, service providers associated with the aircrafts, and/or other information sources.

In some implementations, in addition to or instead of using the contingency risk map for the contingency monitoring (e.g., for detection of contingency events associated with the aircraft traffic), the ISCMS detects a contingency event by receiving information (e.g., a message or an alert) indicating the occurrence of the contingency event. In one example, when a contingency event associated with a flight occurs, the FMS of the aircraft associated with the flight or another communication device associated with the flight (e.g., a communication device of an operator or a service provider associated with the flight) transmits an alert indicating the contingency event has occurred (e.g., information indicating that the flight is in a contingency state), and the ISCMS receives the alert and thereby determines the contingency event has occurred and the flight is in the contingency state. In another example, when a contingency event associated with supporting infrastructure (e.g., a vertiport) occurs, the ISCMS receives (e.g., from a communication device associated with the supporting infrastructure) and alert that informs the ISCMS of the contingency event associated with the supporting infrastructure.

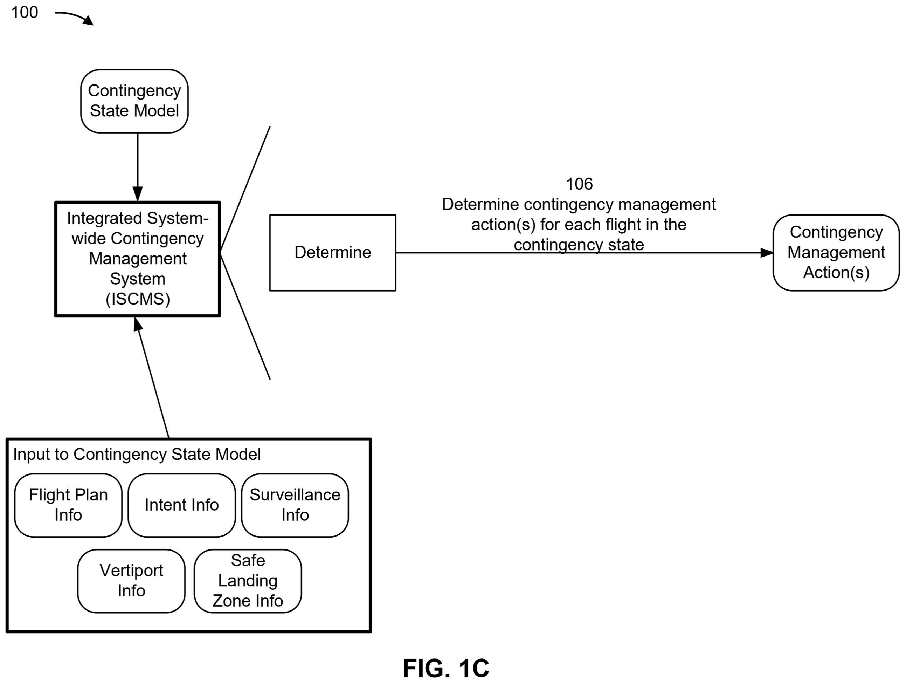

Figs. 1C-1D show the ISCMS, a contingency state model that is included in the ISCMS, and a set of inputs to the contingency state model. The contingency state model is configured to determine contingency management actions for flights in a contingency state. As shown in Figs. 1C-1D, the inputs to the contingency state model include flight plans, intent information, surveillance information, vertiport information, and safe landing zone information. As shown in Fig. 1C, and by reference number 106, the ISCMS determines, using the contingency state model, at least one contingency management action for each flight in the contingency state. The contingency state model determines the contingency management action(s) for each flight in the contingency state based on the inputs to the contingency state model.

The contingency state model identifies any whether any flights are in the contingency state. In some implementations, the ISCMS triggers the contingency state model when a contingency event is detected, and the ISCMS identifies which (if any) flights are in the contingency state in connection with the detected contingency event. When a contingency event is detected for a flight, that flight is identified as being in the contingency state. In some implementations, one or more flights may also be identified as being in the contingency state in connection with a detected contingency event associated with the supporting infrastructure or a detected contingency event associated with another flight, for example, in a case in which the detected contingency event causes (or is expected to cause) another contingency in the one or more flights. Once each flight in the contingency state has been identified, the contingency state model determines at least one contingency management action for each flight in the contingency state. A contingency management action is a suitable safe action associated with the flight to resolve, or attempt to resolve, the contingency situation for the flight. In some implementations, the contingency state model determines the contingency management action(s) for each flight in the contingency state in a rule-based manner.

In some implementations, the contingency management actions determined by the contingency state model vary according to the phase of operation of the flight (e.g., the pre-flight phase or the in-flight phase) and the severity of the contingency event detected. For flights in the pre-flight phase (e.g., flights in the contingency state and the strategic state), the contingency state model determines contingency management actions for managing departures at vertiports (or airports) with potential group ground delay policies and flight cancellations based on one or more delay thresholds. For flights in the in-flight phase (e.g., flights in the contingency state and the tactical state), the contingency management determines contingency management actions for addressing in-flight contingencies including hovering or proceeding directly to an emergency landing depending on the severity of the contingency event. This structured approach enables the decision making, performed by the ISCMS using the contingency state model, to be optimized in order to enhance operational safety and efficiency in response to evolving flight conditions.

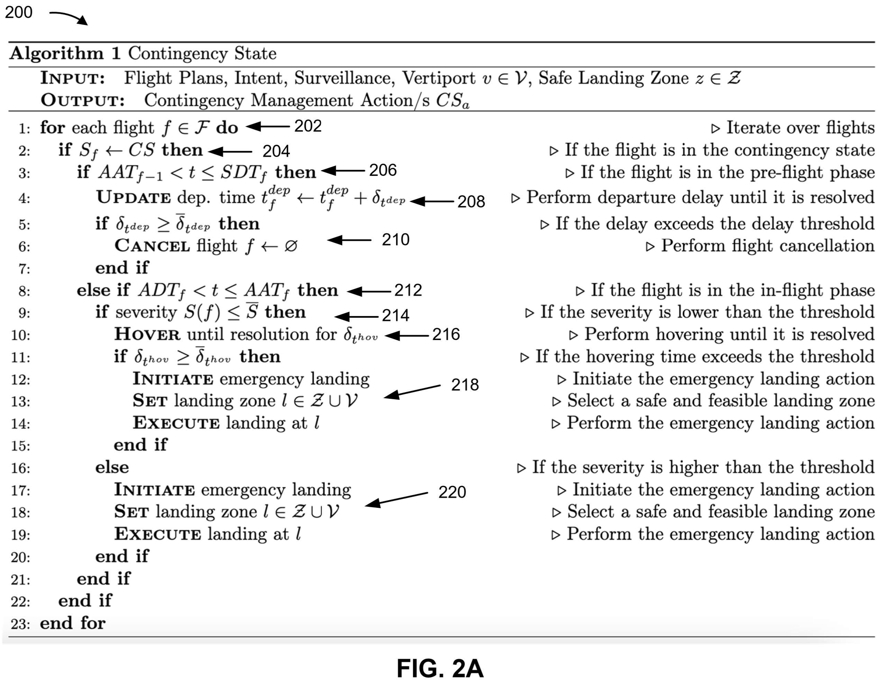

The contingency state model operates, in accordance with an algorithm, as a dynamic model for determining contingency management actions to manage contingencies in flight operations. Accordingly, the ISCMS, using the contingency state model, operates as a dynamic system for managing the contingencies in the flight operations. An example algorithm for the contingency state model is described in connection with Fig. 2A. The ISCMS, using the contingency state model, is configured to process the inputs to the contingency state model to generate pre-flight and/or in-flight contingency management actions for flights in the contingency state. As shown in Figs. 1C-1D, the inputs to the contingency state model include the flight plan information, the intent information, the surveillance information, the vertiport information, and the safe landing zone information. The flight plan information includes flight plans of the flights in the contingency state. The intent information includes intent information associated with the flights in the contingency state. For example, the intent information associated with a flight may indicate a purpose of the flight, a type of the flight, a type of aircraft associated with the flight, one or more goals of the flight, and/or one or more constraints (e.g., a time constraint) associated with the flight, among other examples. The surveillance information includes real-time or near real-time surveillance information associated with the flights in the contingency state. In some implementations, the surveillance information includes real-time or near real-time surveillance information acquired by the aircraft of the flight (e.g., by a camera or sensor of the aircraft). Additionally, or alternatively, in some implementations, the surveillance information includes real-time or near real-time surveillance (e.g., images or videos) of the aircraft of the flight that are acquired by a camera or sensor external to the aircraft (e.g., a camera or a sensor of another aircraft, a camera or a sensor of an operator or service provider device, or a vertiport or airport camera or sensor, among other examples). The vertiport information includes locations of vertiports, which may be potential emergency landing sites for the flights in the contingency state. A vertiport is a dedicated location for takeoff and landing of vertical take-off and landing (VTOL) aircrafts. The safe landing zone information includes locations, other than vertiports, that provide safe landing zones for aircrafts (e.g., VTOL aircrafts) in the contingency state. In some implementations, the inputs to the contingency state model may include any subset of one or more of the inputs shown in Figs. 1C-1D. In some implementations, the inputs to the contingency state model may further include other information, such as airport information that indicates locations of airports or other information indicating other types of potential landing sites (e.g., a landing platform or an aircraft carrier, among other examples) for the aircrafts in the contingency state.

The contingency state model, in accordance with the algorithm for the contingency state model, operates within a simulation framework and continuously checks for the occurrence of a contingency event in the traffic. That is, the contingency model simulates the aircraft traffic including multiple flights, and the contingency mode identifies whether each flight is in the contingency state. In addition, the contingency state model identifies and updates the traffic status of each flight in the contingency state and evaluates each flight's contingency based on the flight phase of that flight.

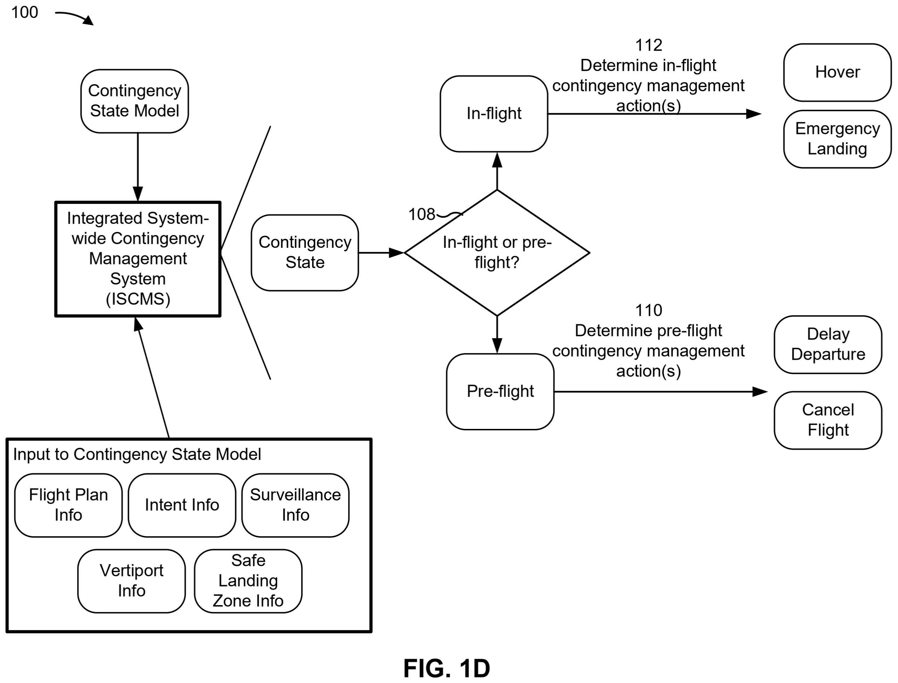

As shown in Fig. 1D, the ISCMS is configured to use the contingency state model to identify one or more flights in the contingency state and determine one or more in-flight or pre-flight contingency management actions for each flight in the contingency state. As shown in Fig. 1D, and by reference number 108, for each flight in the contingency state, the contingency state model determines whether the flight is in the in-flight phase or the pre-flight phase. In some implementations, the contingency state model may determine whether a flight is in the in-flight phase or the pre-flight phase based on the monitoring of the flight statuses of the flights included in the aircraft traffic performed by the ISCMS, as discussed above in connection with Fig. 1A.

As further shown in Fig. 1D, and by reference number 110, for each flight in the contingency state that is determined to be in the pre-flight phase, the contingency state model determines one or more pre-flight contingency management actions for the flight. The one or more pre-flight contingency management actions, determined by the contingency state model for the flight in the pre-flight phase, include one or more of delaying the departure of the flight or canceling the flight. Accordingly, when a flight in the pre-flight phase is in the contingency state, the contingency state model determines whether to delay the departure time for the flight, cancel the flight, or both (e.g., delay the flight subject to certain conditions and then cancel the flight). In some implementations, for flights in the contingency state that are in the pre-flight phase (e.g., scheduled flights at a vertiport), the contingency state model determines pre-flight contingency actions that execute ground delays (e.g., delaying the departure time) and flight cancelations based on time thresholds. In this case, the contingency state model determines to initially delay the departure of the flight subject to a delay time threshold. If the contingency is resolved for the flight before the delay time exceeds the delay time threshold, the flight departs at a delayed departure time. If the delay time exceeds the delay time threshold, the contingency state model determines to cancel the flight. In one example, the delay time threshold may be ten minutes. In some other examples, other delay time thresholds may be used. In some implementations, different delay time thresholds are used for different flights based on different delay sensitivities associated with the different flights. For example, different delay time thresholds may be used for different types of flights (e.g., passenger or cargo flight), different types of aircraft, and/or different times or locations (e.g., based on an amount of flight traffic scheduled at a vertiport at a given time).

In some implementations, the determination of the pre-flight contingency management action(s) for a flight in the contingency state and the pre-flight state by the contingency state model is based on a severity of the contingency event the caused the flight to be in the contingency state. For example, in some implementations, in the case of a high-severity contingency event that affects a flight on the ground (e.g., in the pre-flight phase), the contingency state model determines to implement the flight cancelation pre-flight contingency management action immediately for the flight (e.g., without first delaying the flight subject to the delay time threshold).

As further shown in Fig. 1D, and by reference number 112, for each flight in the contingency state that is determined to be in the in-flight phase, the contingency state model determines one or more in-flight contingency management actions for the flight. The one or more in-flight contingency management actions, determined by the contingency state model for the flight in the in-flight phase, include one or more of a hovering action or an emergency landing action. The hovering action (also referred to as a "loitering action") triggers to the aircraft associated with the flight to hover at a current position. The emergency landing action triggers the aircraft associated with the flight to perform an emergency landing. In some implementations, for a flight in the contingency state that is in the in-flight phase, the contingency state model assesses a feasibility of the hovering action and/or the emergency landing action for the flight based on the severity of the contingency event and one or more operational constraints of the aircraft, such as a battery condition or a flight envelope of the aircraft. In this case, the contingency state model determines the in-flight contingency action(s) based on the assessment of the feasibility of the hovering action and/or the emergency landing option. In some implementations, in a case of a low severity contingency event for a flight in the in-flight phase (for example, a case in which the contingency event is a temporary issue, such as an instant communication or control loss), the contingency state model determines/triggers the hovering action for the flight subject to a maximum time duration. If the contingency is resolved for the flight before a time duration of the hovering reaches the maximum time duration, the aircraft ends the hovering and the flight resumes. If the contingency remains unresolved and the time duration of the hovering reaches the maximum time duration, the contingency state model determines/triggers the emergency landing action for the flight. The emergency landing action may be based on the availability of a nearby vertiport (or airport) or safe landing zone and the operational limitations of the airport. In one example, the maximum time duration for the hovering action may be two minutes. In some other examples, other maximum time durations may be used. In some implementations, different maximum time durations are used for different flights, different types of aircraft, and/or different operating characteristics of an aircraft (e.g., in accordance with the feasibility assessment). In some implementations, in a case of a high severity contingency event for a flight in the in-flight phase, the contingency state model may immediately determine/trigger an emergency landing action for the flight. In a case in which the contingency state model determines a contingency event for a flight, the contingency state model also selects a landing zone for the emergency landing of the flight. For example, the contingency state model selects the landing zone based on locations of nearby vertiports, airports, or other safe landing zones and the operations limitations of the aircraft.

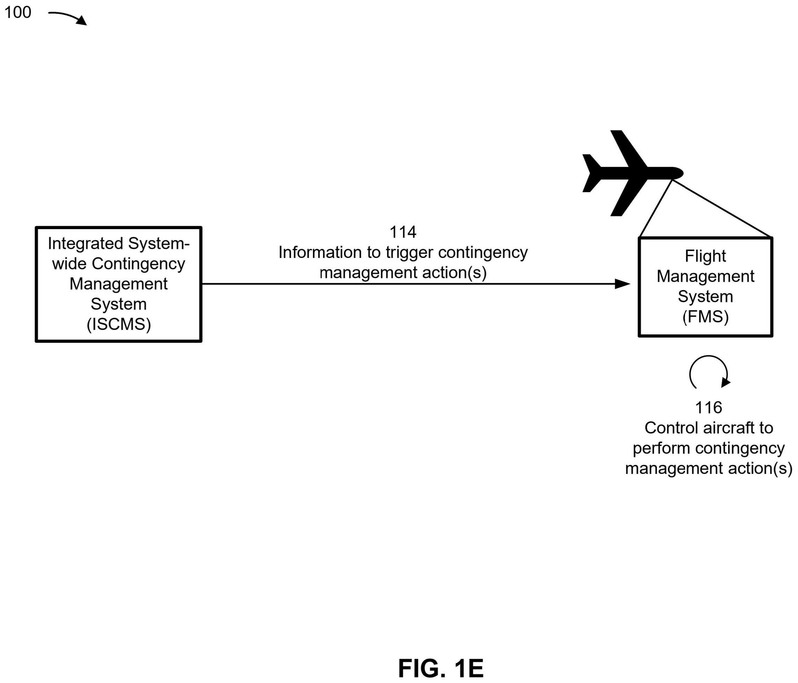

Fig. 1E shows the ISCMS, an aircraft associated with a flight in the contingency state, and the FMS of the aircraft. As shown in Fig. 1E, and by reference number 114, the ISCMS transmits, and the FMS of the aircraft receives, information to trigger the one or more contingency management actions determined by the contingency state model for the flight in the contingency state. For each flight in the contingency state, the ISCMS transmits information to trigger the contingency management action(s) determined for that flight to the FMS of the aircraft associated with that flight. In some implementations, the ISCMS transmits the information to trigger the contingency management action(s) determined for a flight in the contingency state directly to the FMS of the aircraft associated with the flight. In this case, a communication system of the ISCMS is configured to communicate with the FMS to transmit the information to trigger the contingency management action(s) directly to the FMS, and the FMS is configured to communicate with the communication system of the ISCMS to receive the information to trigger the contingency management action(s) directly from the ISCMS. In some other implementations, instead of transmitting the information to trigger contingency management action(s) determined for a flight in the contingency state directly to the FMS of the aircraft associated with the flight, the ISCMS transmits the information to trigger the contingency management action(s) to a communication device (or multiple communication devices) associated with the aircraft, such as a communication device of an operator of the aircraft and/or a communication device of a service provider associated with the aircraft, and the communication device associated with the aircraft transmits the information to trigger the contingency management action(s) to the FMS of the aircraft.

The information to trigger the contingency management action(s) determined for a flight in the contingency state includes information indicating the contingency management action(s) determined for the flight, as well as any other relevant information associated with the contingency management action(s). In some implementations, the information to trigger the contingency management action(s) includes or is included in a command or a message that triggers (e.g., commands or requests) the FMS to control the aircraft to perform the indicated contingency management action(s). In a case in which the flight in the contingency state is in the pre-flight phase, the information to trigger the contingency management action(s) indicates the pre-flight contingency management action(s) determined for the flight, as well as any relevant information associated with the pre-flight contingency management action(s). For example, in this case, the information to trigger the contingency management action(s) may indicate a delay departure action and a delay time threshold associated with the delay departure action, and/or the information to trigger the contingency management action(s) may indicate a cancel flight action. In a case in which the flight in the contingency state is in the in-flight phase, the information to trigger the contingency management action(s) indicates the in-flight contingency management action(s) determined for the flight, as well as any relevant information associated with the in-flight contingency management action(s). For example, in this case, the information to trigger the contingency management action(s) may indicate a hover action and a maximum time duration associated with the hover action, and/or the information to trigger the contingency management action(s) may indicate an emergency landing action as a location of a landing zone for the emergency landing action.

As further shown in Fig. 1E, and by reference number 116, the FMS of the aircraft controls the aircraft to perform the one or more contingency management actions determined for the flight in the contingency state. The FMS of an aircraft associated with a flight in the contingency state receives the information to trigger the contingency management action(s) determined for the flight, and the FMS controls the aircraft to perform the contingency management action(s) in connection with receiving the information. That is, the information triggers the FMS to control the aircraft to perform the contingency management action(s) indicated in the information. In some implementations, in a case in which the flight in the contingency state is in the pre-flight phase, the FMS controls the aircraft to delay the departure time of the flight and/or cancel the flight in accordance with the indicated pre-flight contingency management action(s) and the relevant information associated with the pre-flight contingency management action(s) included in the information received by the FMS. In some implementations, in a case in which the flight in the contingency state is in the in-flight phase, the FMS controls the aircraft to hover for a certain time duration (e.g., until the contingency is resolved or until the maximum time duration is reached) and/or perform an emergency landing at an indicated landing zone in accordance with the indicated in-flight contingency management action(s) and the relevant information associated with the in-flight contingency management action(s) included in the information received by the FMS.

Following the determination of the contingency management actions for one or more flights in the contingency state using the contingency management model and the triggering of the determined contingency management actions for the one or more flights in the contingency state, the ISCMS uses a tactical management model and a strategic management model to determine relevant traffic management actions for other flights to maintain a safe and efficient environment for surrounding airline traffic and other airline traffic affected directly or indirectly by the contingency management actions performed for the one or more flights in the contingency state and/or the underlying contingency event.

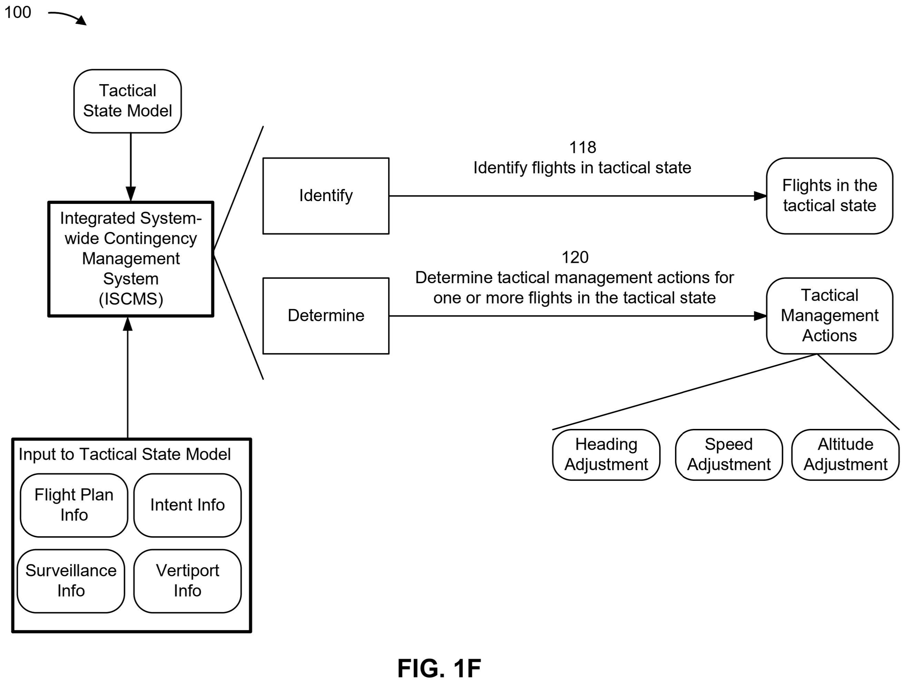

Fig. 1F shows the ISCMS, a tactical state model that is included in the ISCMS, and a set of inputs to the tactical state model. The tactical state model is configured to determine tactical management actions for flights in a tactical state. A flight is considered to be in the tactical state during the in-flight phase of the flight. Tactical management actions are in-flight actions or maneuvers performed by an aircraft associated with a flight in the tactical state. As shown in Fig. 1F, the inputs to the tactical state model include flight plan information, intent information, surveillance information, and vertiport information. The ISCMS is configured to use the tactical state model to identify flights in the tactical state and determine tactical management actions for one or more flights in the tactical state. The tactical management action for a flight in the tactical state includes a heading adjustment, a speed adjustment, and/or an altitude adjustment. In some implementations, the ISCMS is configured to activate the tactical state model, in connection with detection of one or more contingency events, after the ISCMS uses the contingency state model to resolve the contingency events for any flights in the contingency state.

As shown in Fig. 1F, and by reference number 118, the tactical state model identifies flights in the tactical state. In some implementations, the tactical state model determines which flights included the aircraft traffic are in the in-flight phase based on the monitoring of the flight statuses of the flights included in the aircraft traffic performed by the ISCMS, as discussed above in connection with Fig. 1A. The tactical state model identifies each flight that is in the in-flight phase as a flight in the tactical state.

As further shown in Fig. 1F, and by reference number 120, the tactical state model determines tactical management actions for one or more of the flights in the tactical state. The tactical management actions for a flight include a heading adjustment, a speed adjustment, and/or an altitude adjustment. The ISCMS is configured to use the tactical state model to determine the tactical management actions for one or more of the flights in the tactical state based on the inputs to the tactical state model. As shown in Fig. 1F, the inputs to the tactical state model include flight plan information indicating flight plans for the flights in the tactical state, intent information associated with the flights in the tactical state, surveillance information associated with the flights in the tactical state, and vertiport information. In some implementations, the inputs to the tactical state model may include any subset of one or more of the inputs shown in Fig. 1F. In some implementations, the inputs to the tactical state model may further include other information, such as information associated with the flights in the tactical state, information associated with the aircrafts of the flights in the tactical state, and/or information associated with infrastructure supporting the aircraft traffic, among other examples.

In some implementations, the tactical state model identifies conflicts for the flights in the tactical state based on the contingency management actions performed by one or more flights in the contingency state and applies a conflict resolution model to determine tactical management actions to resolve the identified conflicts. A conflict for a flight in the tactical state refers to a potential collision (e.g., an in-air collision) between the flight and another flight. In some implementations, in order to identify the conflicts for the flights in the tactical state based on the contingency management actions for the flights in the contingency state, the tactical state model determines whether the contingency management actions will result in a flight being within a near mid-air collision distance of another flight. The near mid-air collision distance is defined with a horizontal separation threshold and a vertical separation threshold, such that two flights are within the near mid-air collision distance of each other when the horizontal distance between the respective aircrafts of the two flights is within the horizontal separation threshold and the vertical distance between the respective aircrafts of the two flights is within the vertical separation threshold. In one example, the horizontal separation threshold is 150 meters, and the vertical separation threshold is 30 meters. The tactical state model may identify a conflict between a flight in the contingency state and a flight in the tactical state when the tactical state model determines that the contingency management action(s) for the flight in the contingency state will cause the flight in the contingency state and the flight in the tactical state to be within the near mid-air collision distance of each other. Once tactical management actions are determine for one or more flights in the tactical state, the tactical state model similarly identifies conflicts (e.g., potential collisions) due to the tactical management actions by determining whether the tactical management actions will cause any of the one or more flights to be within the near mid-air collision distance of any other flights in the tactical state.

In some implementations, the conflict resolution model applied by the tactical state model focuses on three different tactical management actions (e.g., in-flight actions) as potential solutions to resolve conflicts identified for the flights in the tactical state. These tactical management actions include heading adjustment, speed adjustment, and altitude adjustment. The tactical state model selects the tactical management actions for a flight for which a conflict is identified in a rule-based manner. In some implementations, each individual distinct tactical management action (e.g., heading adjustment, speed adjustment, and altitude adjustment) is available in multiple variations (e.g., multiple present values for each tactical management action). For example, each tactical management action (e.g., heading adjustment, speed adjustment, and altitude adjustment) may be available in two variations. In one example in which there are two variations for each tactical management action, the options for the speed adjustment action include a reduction in speed of 5 meters/second or 10 meters/second, the options for the altitude adjustment action include climbing 100 meters or descending 100 meters, and the options for the heading adjustment action include adjusting the heading 10 degrees right or left. In some implementations, the tactical management actions function as a maneuver set, such that once an aircraft associated with a flight takes a tactical management action, the primary objective is to satisfy an action limit, then to maintain the adjusted heading, speed, and/or altitude for a specific time, and finally to return to its planned flight path. In some implementations, in a case in which multiple conflicts are identified for flights in the tactical state, the tactical state model selects which flight (e.g., which aircraft) is to perform a tactical management and which tactical management action is to be performed first based on battery levels and contingency situations of the flights, to efficiently resolve the conflicts. In some examples, when a conflict between a flight in the contingency state and a flight in the tactical state (but not in the contingency state) is identified, the tactical state model selects the flight that is in the tactical state (but not in the contingency state) as the flight to perform the tactical management action to ensure a safe separation between the aircrafts associated with the flights. Once the tactical management action is performed and the separation between the flights is secured, the deconflicted flight returns to its nominal operating limits and executes its flight plan.

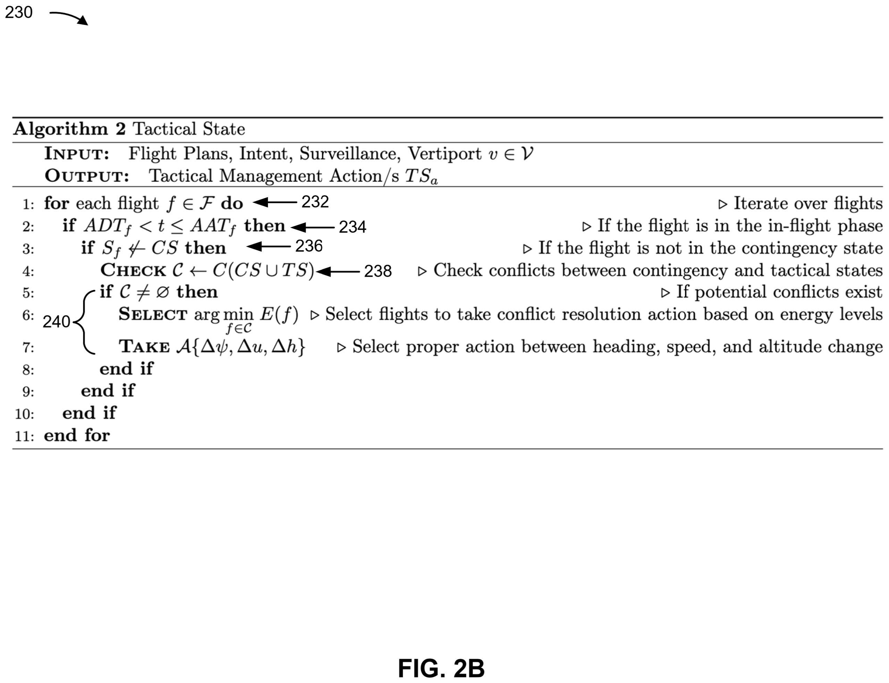

The tactical state model operates, in accordance with an algorithm, to dynamically manage flights in the tactical state (e.g., the in-flight phase) by adjusting the speed, heading, or altitude in response to any type of contingency event. In some implementations, the tactical state model monitors an emergency situation in the aircraft traffic (e.g., the contingency management actions for the flights in the contingency state and/or other effects of a contingency event) and determine tactical updates (e.g., tactical management actions for one or more flights in the tactical state) to rearrange the aircraft traffic. An example algorithm for the tactical state model is described in connection with Fig. 2B. The tactical state model, in accordance with the algorithm for the tactical state model, operates continuously within a simulation framework, in which the aircraft traffic is simulated and the traffic statuses for the flights are updated to ensure real-time responsiveness. The tactical state model assesses each flight in the aircraft traffic to determine whether there is a flight in the contingency state. If so, the tactical state model retrieves tactical phase traffic data and evaluates all the potential conflicts for the flights in the tactical state (e.g., based on the contingency management action(s) for each flight in the contingency state). Once the conflicts (e.g., potential collisions) are identified, the tactical state model selects a flight for which a subsequent tactical management action is to be determined. In the event that a compared pair of flights for which a conflict is identified includes a flight that is in the contingency state, then the tactical state model selects the other flight in the compared pair of flights (e.g., the flight not in the contingency state) as the flight that for which one more tactical management actions to resolve the conflict are determined. In a case in which neither flight of a compared pair of flights is in the contingency state, then the tactical state model checks which flight plan consumes the most energy throughout the operation of the flight and selects the flight that consumes less energy to take the one or more tactical management actions to resolve the conflict. The tactical state model iteratively resolves conflicts where a sequence of tactical management actions is determined (and triggered) in a particular order (e.g., based on the energy levels of the flights) until all traffic conflicts have been addressed. In this way, for flights in the tactical state that are not associated with the contingency event (e.g., that are not in the contingency state), the ISCMS uses the tactical state model to continuously monitor traffic to maintain situational awareness and operational safety.

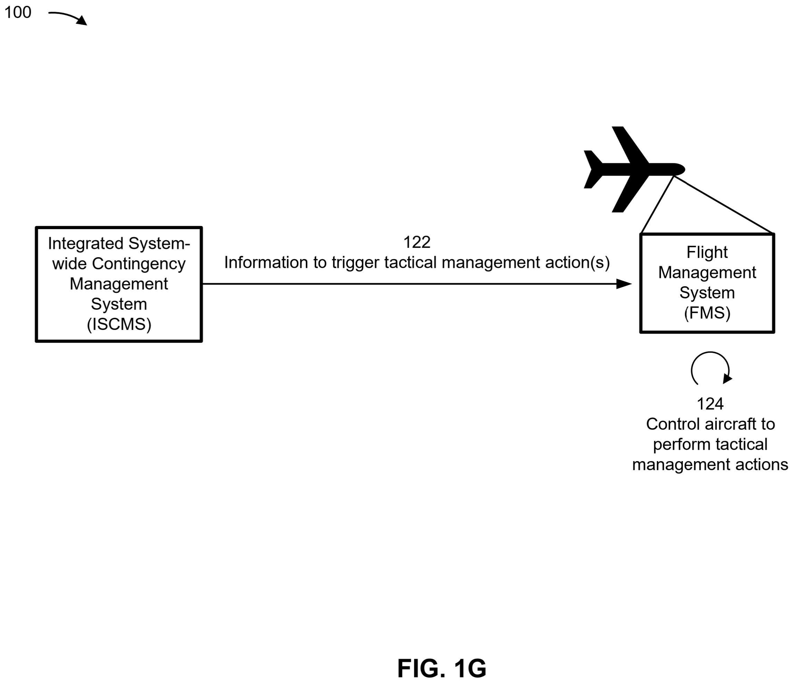

Fig. 1G shows the ISCMS, an aircraft associated with a flight in the tactical state, and the FMS of the aircraft. As shown in Fig. 1G, and by reference number 122, the ISCMS transmits, and the FMS of the aircraft receives, information to trigger the one or more tactical management actions determined by the tactical state model for the flight in the tactical state. For each of one or more flights in the tactical state for which the tactical state model determines one or more tactical management actions, the ISCMS transmits information to trigger the tactical management action(s) determined for that flight to the FMS of the aircraft associated with that flight. In some implementations, the ISCMS transmits the information to trigger the tactical management action(s) determined for a flight in the tactical state directly to the FMS of the aircraft associated with the flight. In this case, a communication system of the ISCMS is configured to communicate with the FMS to transmit the information to trigger the tactical management action(s) directly to the FMS, and the FMS is configured to communicate with the communication system of the ISCMS to receive the information to trigger the tactical management action(s) directly from the ISCMS. In some other implementations, instead of transmitting the information to trigger tactical management action(s) determined for a flight in the tactical state directly to the FMS of the aircraft associated with the flight, the ISCMS transmits the information to trigger the tactical management action(s) to a communication device (or multiple communication devices) associated with the aircraft, such as a communication device of an operator of the aircraft and/or a communication device of a service provider associated with the aircraft, and the communication device associated with the aircraft transmits the information to trigger the tactical management action(s) to the FMS of the aircraft. The information to trigger the tactical management action(s) determined for a flight in the tactical state includes information indicating the tactical management action(s) determined for the flight. For example, the information to trigger the tactical management action(s) indicates a heading adjustment, a speed adjustment, and/or an altitude adjustment for the flight. In some implementations, the information to trigger the tactical management action(s) includes or is included in a command or a message that triggers (e.g., commands or requests) the FMS to control the aircraft to perform the indicated tactical management action(s).

As further shown in Fig. 1G, and by reference number 124, the FMS of the aircraft controls the aircraft to perform the one or more contingency tactical actions determined for the flight in the tactical state. The FMS of an aircraft associated with a flight in the tactical state receives the information to trigger the tactical management action(s) determined for the flight, and the FMS controls the aircraft to perform the tactical management action(s) in connection with receiving the information. That is, the information triggers the FMS to control the aircraft to perform the tactical management action(s) indicated in the information. In some implementations, the FMS controls the aircraft to adjust the heading the aircraft, adjust the speed of the aircraft, and/or adjust the altitude of the aircraft in accordance with the tactical management action(s) indicated in the information.

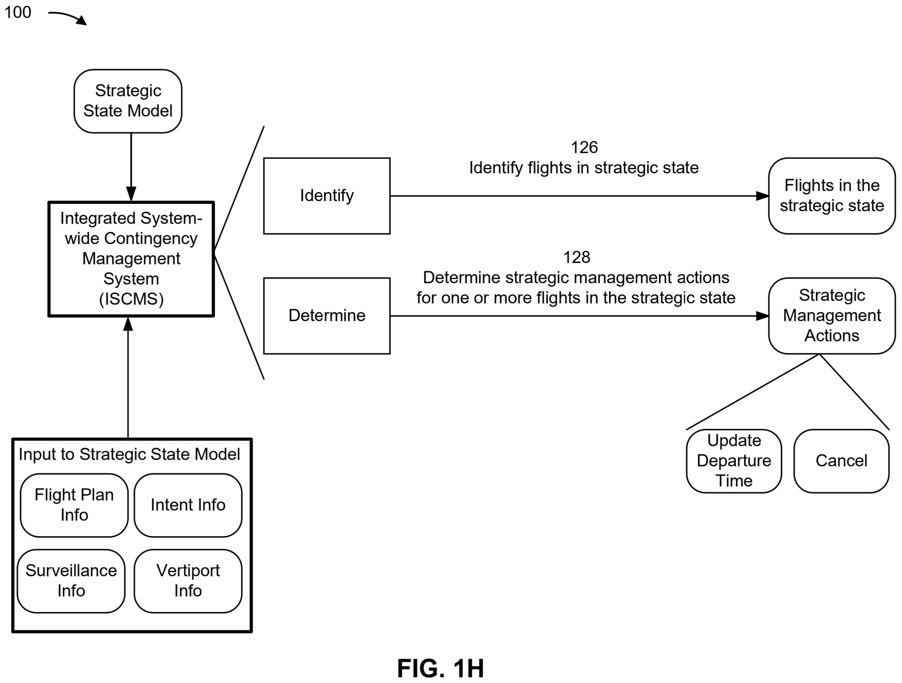

Fig. 1H shows the ISCMS, a strategic state model that is included in the ISCMS, and a set of inputs to the strategic state model. The strategic state model is configured to determine strategic management actions for flights in a strategic state. A flight is considered to be in the strategic state during the pre-flight phase of the flight. Strategic management actions are pre-flight actions associated with the scheduling of a flight in the strategic state. As shown in Fig. 1H, the inputs to the strategic state model include flight plan information, intent information, surveillance information, and vertiport information. The ISCMS is configured to use the strategic state model to identify flights in the strategic state and determine strategic management actions for one or more flights in the strategic state. The strategic management action for a flight in the strategic state (e.g., a scheduled flight) includes an update departure time action or cancel flight action. In some implementations, the ISCMS is configured to activate the strategic state model, in connection with detection of one or more contingency events, after the ISCMS uses the contingency state model to resolve the contingency events for any flights in the contingency state and after the ISCMS uses the tactical state model to resolve potential in-flight conflicts.

As shown in Fig. 1H, and by reference number 126, the strategic state model identifies flights in the strategic state. In some implementations, the strategic state model determines which flights included the aircraft traffic are in the pre-flight phase based on the monitoring of the flight statuses of the flights included in the aircraft traffic performed by the ISCMS, as discussed above in connection with Fig. 1A. The strategic state model identifies each flight that is in the pre-flight phase as a flight in the strategic state.

As further shown in Fig. 1H, and by reference number 128, the strategic state model determines strategic management actions for one or more of the flights in the strategic state. The strategic management action for a flight includes an update departure time action or a cancel flight action. The ISCMS is configured to use the strategic state model to determine the strategic management actions for one or more of the flights in the strategic state based on the inputs to the strategic state model. As shown in Fig. 1F, the inputs to the strategic state model include flight plan information indicating flight plans for the flights in the strategic state, intent information associated with the flights in the strategic state, surveillance information associated with the flights in the strategic state, and vertiport information. In some implementations, the inputs to the strategic state model may include any subset of one or more of the inputs shown in Fig. 1H. In some implementations, the inputs to the strategic state model may further include other information, such as information associated with the flights in the strategic state, information associated with the aircrafts of the flights in the strategic state, and/or information associated with infrastructure supporting the aircraft traffic, among other examples.

In some implementations, the strategic state model determines strategic management actions to address the prompt scheduling and rescheduling of on-ground traffic following the occurrence of contingency events within the traffic environment and the resulting actions (e.g., the contingency management actions and the tactical management actions) performed in response to contingency events. In the event of an emergency (e.g., a contingency event), the emergency itself or the resulting actions can disrupt scheduled flights. The strategic state model determines strategic management actions to replan the aircraft traffic in the pre-flight phase (e.g., the flights in the strategic state).

The strategic state model applies a traffic planning/replanning model that considers multiple constraints to determine efficient ground delay and flight cancellation policies for the flights in the strategic state. The strategic state model identifies conflicts for flights in the strategic state and determines strategic management actions for the flights in the strategic state to resolve the conflicts. Conflicts for flights in the strategic state are scheduling conflicts, such as two flights being scheduled with the same departure time at the same location. In some cases, potential conflicts are resolved in a strategic planning stage in which the flights are initially scheduled. However, additional conflicts for flights in the strategic state may still be occur throughout daily operations due to initiating an emergency landing and changing the intended flight path for a flight in connection with a contingency event, rearranging the traffic in the in-flight phase, deviations from flight plans, and so forth. The strategic state model identifies potential conflicts (e.g., scheduling conflicts) for flights in the strategic state caused by the occurrence of a contingency event (e.g., a contingency event associated with a flight or infrastructure supporting the aircraft traffic), the contingency management actions for one or more flights in the contingency state, and the tactical management actions for one or more flights in the tactical state. In some implementations, the strategic state model considers capacity limitations of the vertiports when determining the strategic management actions for the flights in the strategic state in order to balance the expected demand at a vertiport with the available capacity at the vertiport and properly allocate resources accordingly to efficiently maintain daily operations. In some implementations, the strategic state model considers the state of a battery and charging considerations of aircrafts (e.g., electric AAM aircrafts) when determining the strategic management actions for the flights in the strategic state. In some implementations, the strategic state model considers a sensitivity to delay when determining the strategic management actions for the flights in the strategic state. The strategic state model determines the strategic management actions based on all or a subset of the above described factors to adjust the scheduling of the flights in the strategic state while maintaining safety and efficiency.

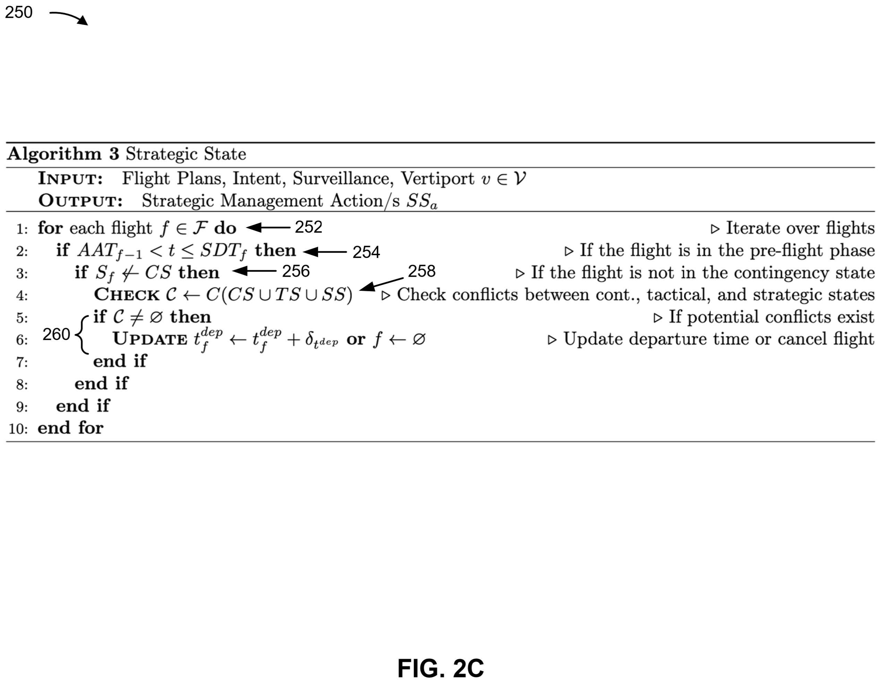

The strategic state model operates, in accordance with an algorithm, to dynamically schedule and re-schedule flights in the strategic state (e.g., the pre-flight phase) in response to both on-ground and in-flight contingencies in the aircraft traffic environment. The strategic state model determines (and triggers) strategic management actions, such as departure delays or flight cancellations, to efficiently schedule and/or reschedule aircraft traffic (e.g., AAM traffic). An example algorithm for the strategic state model is described in connection with Fig. 2C. The strategic state model, in accordance with the algorithm for the strategic state model, operates continuously within a simulation framework, in which the aircraft traffic is simulated and the traffic statuses for the flights are updated to reflect real-time conditions. For each flight in the aircraft traffic, the strategic state model assesses determines whether the flight is in the contingency state. If so, the strategic state model retrieves information (e.g., the input information) for the all flights that are in the strategic state and identifies any potential conflicts between the flight in the contingency state and other scheduled traffic (e.g., the flights in the strategic state). If any conflicts are identified, the strategic state model determines strategic management actions for one or more flights in the strategic state to resolve the identified conflicts. For example, the strategic state model determines to update/adjust departure times of one or more flights in the strategic state or cancel one or more flights in the strategic state based on various constraints, as needed to resolve the identified conflicts and mitigate potential disruptions. In some implementations, the constraints that are taken into account by the strategic state model include identified conflicts (e.g., due to one or more contingency management actions, due to one or more tactical management actions, or due to a contingency event), capacity limits at intended departure and arrival vertiports, energy levels of the aircrafts associated with the flights in the strategic state, and sensitivity (e.g., passenger sensitivity) to delays. In some implementations, the strategic state model continuously monitors flights that are not currently facing contingencies, thereby ensuring ongoing operational stability and efficiency. This proactive approach allows for effective adjustment of flight schedules, enhancing safety, and minimizing delays within the operational framework.

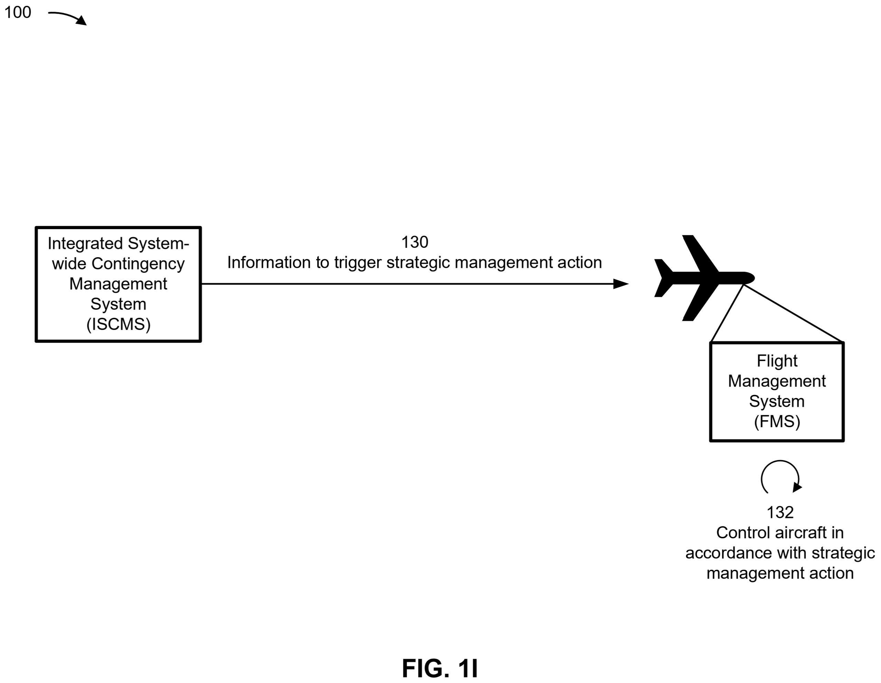

Fig. 1I shows the ISCMS, an aircraft associated with a flight in the strategic state, and the FMS of the aircraft. As shown in Fig. 1G, and by reference number 130, the ISCMS transmits, and the FMS of the aircraft receives, information to trigger a strategic management action determined by the strategic state model for the flight in the strategic state. For each of one or more flights in the strategic state for which the strategic state model determines a strategic management action, the ISCMS transmits information to trigger the strategic management action determined for that flight to the FMS of the aircraft associated with that flight. In some implementations, the ISCMS transmits the information to trigger the strategic management action determined for a flight in the strategic state directly to the FMS of the aircraft associated with the flight. In this case, a communication system of the ISCMS is configured to communicate with the FMS to transmit the information to trigger the strategic management action directly to the FMS, and the FMS is configured to communicate with the communication system of the ISCMS to receive the information to trigger the strategic management action directly from the ISCMS. In some other implementations, instead of transmitting the information to trigger strategic management action determined for a flight in the strategic state directly to the FMS of the aircraft associated with the flight, the ISCMS transmits the information to trigger the strategic management action to a communication device (or multiple communication devices) associated with the aircraft, such as a communication device of an operator of the aircraft and/or a communication device of a service provider associated with the aircraft, and the communication device associated with the aircraft transmits the information to trigger the strategic management action to the FMS of the aircraft. The information to trigger the strategic management action determined for a flight in the strategic state includes information indicating the strategic management action(s) determined for the flight. For example, the information to trigger the strategic management action indicates an update to the scheduled departure time for the flight or a cancelation of the flight. In some implementations, the information to trigger the strategic management action includes or is included in a command or a message that triggers (e.g., commands or requests) the FMS to control the aircraft in accordance with the indicate strategic management action.

As further shown in Fig. 1I, and by reference number 132, the FMS of the aircraft controls the aircraft in accordance with the strategic management action determined for the flight in the strategic state. The FMS of an aircraft associated with a flight in the strategic state receives the information to trigger the strategic management action determined for the flight, and the FMS controls the aircraft in accordance with the strategic management action in connection with receiving the information. That is, the information triggers the FMS to control the aircraft in accordance with the strategic management action indicated in the information. In some implementations, the FMS controls the aircraft to take off at an update departure time or the FMS controls the aircraft in accordance with the flight of the aircraft being canceled in connection with receiving the information to trigger the strategic management action.

The ISCMS is an integrated system that includes the contingency state model, the tactical state model, and the strategic state model. Each discrete state model has its own functionality and is triggered under specific conditions that have continuous and discrete dynamics. In some implementations, the ISCMS represent the aircraft traffic environment using a hybrid automaton, which provides a mathematical model to represent the continuous-time and event-driven behaviors of the system. This approach also allows modularity for the system, which enables a testing infrastructure of distinct models included in the ISCMS. A hybrid automaton *A* can be represented as *A = {S, T, γ, sᵢ, S_{f}}* where *S* is the set of system states, *T* is the finite set of transition events, y: *S × T* → *S* is the transition function, *sᵢ* is the initial state of the system, and *S_{f}* is the set of final states for the system.

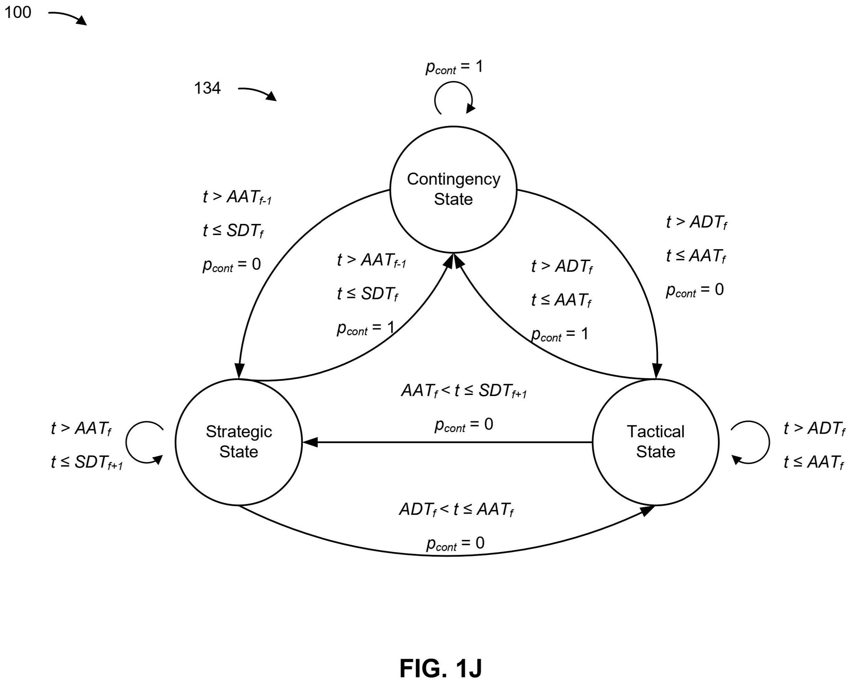

Fig. 1J shows a state transition model 134 for the ISCMS. A flight in the aircraft traffic is initialized in the strategic state and remains in that state as long as the actual arrival time of the latest flight *f* is less than the current time *(t > AA T_{f}*) and the scheduled departure time of the next flight *f*+*1* is greater than the current time *(t* ≤ *SDT_{f+1}*)*.* Subsequently, the flight remains in the tactical state while the current time is less than the actual arrival time of the flight *(t* ≤ *AAT_{f}*) and greater than the actual departure time *(t > ADT_{f}).* In the event of a contingency of a high probability of observing a contingency, regardless of the state of the flight, a contingency flag is raised within the system (*p_{cont} = 1*) and the flight is placed in contingency state. When the flight is determined to be in the contingency state, the ISCMS activates the contingency state model and uses the contingency state model to determine a contingency management action for the flight, as discussed above.

The ISCMS assigns different states to each individual flight based on traffic status (e.g., in accordance with the state transition model 134 shown in Fig. 1J). In some implementations, once a contingency event is detected (e.g., the probability of contingency risk is determined to be above a threshold) for any of the flights within the aircraft traffic, a contingency flag is raised for the whole traffic, and the ISCMS begins assigning states to the flights. First, the ISCMS activates the contingency state model to determine contingency management actions for any flights that are in the contingency state, and the ICMS triggers the aircrafts associated with the flights to perform the contingency management actions to mitigate the contingency situation. After that, the ISCMS activates the tactical state model to determine tactical management actions for flights that are in the tactical state, and the ISCMS triggers the aircrafts associated with the flights that are in the tactical state to perform the tactical management actions to avoid potential in-flight conflicts (e.g., collisions). Finally, the ISCMS activates the strategic state model to determine strategic management actions for flights that are in the strategic state, and the ISCMS triggers the strategic management actions for the flights that are in strategic state to resolve potential conflicts with the rest of the traffic considering capacity, passenger, and energy related constraints.

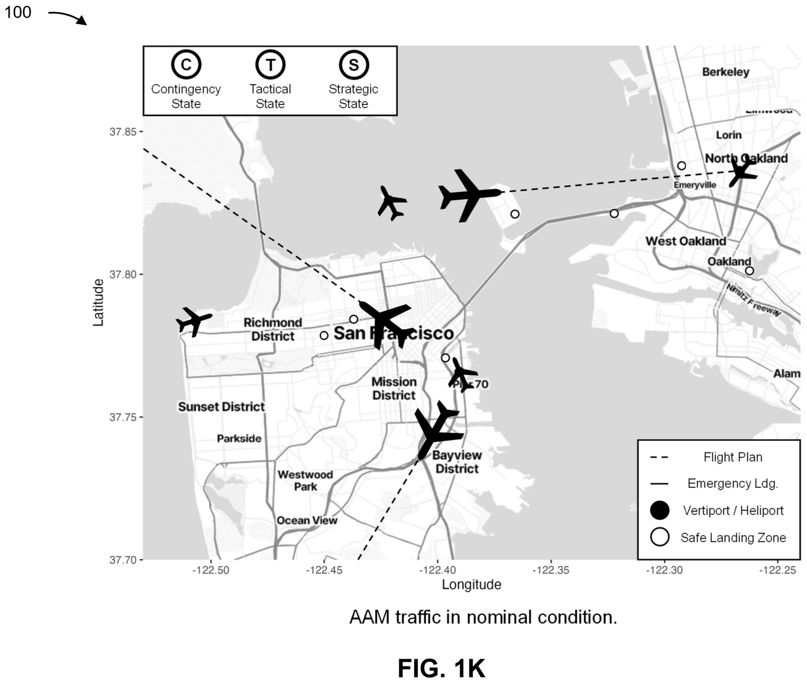

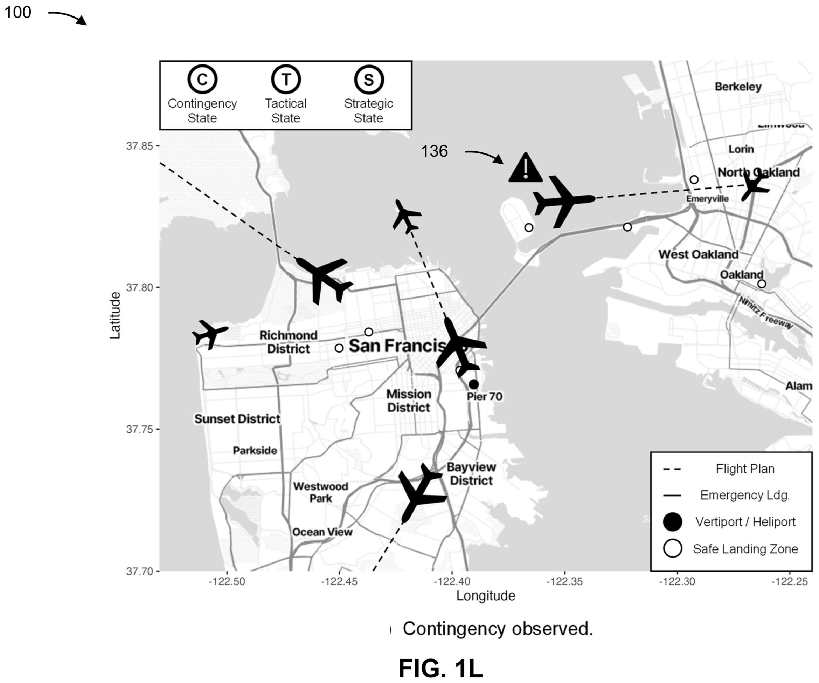

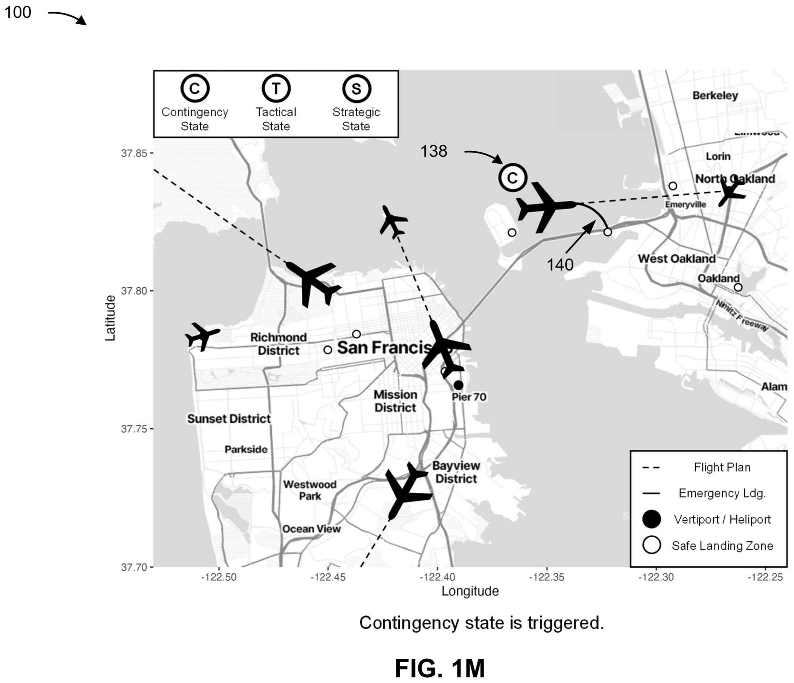

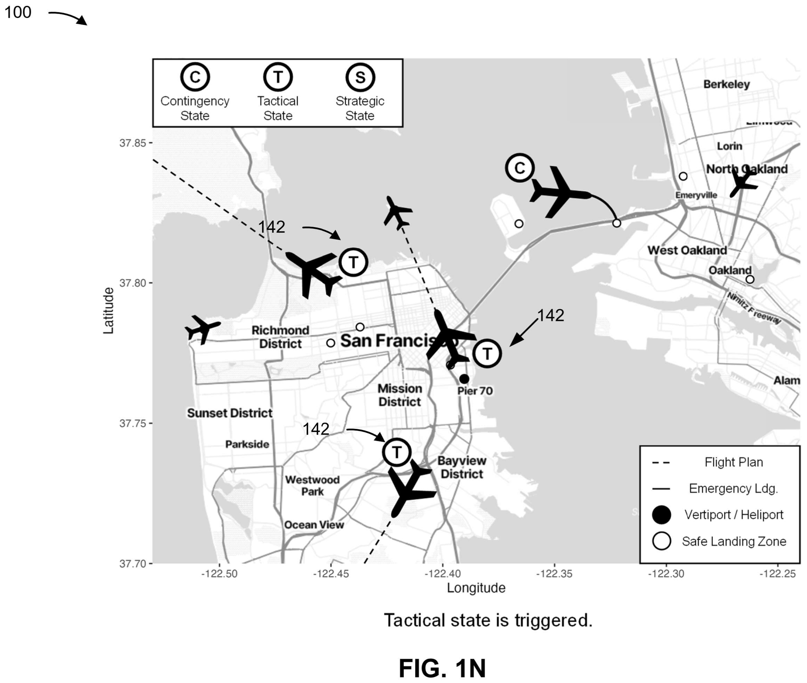

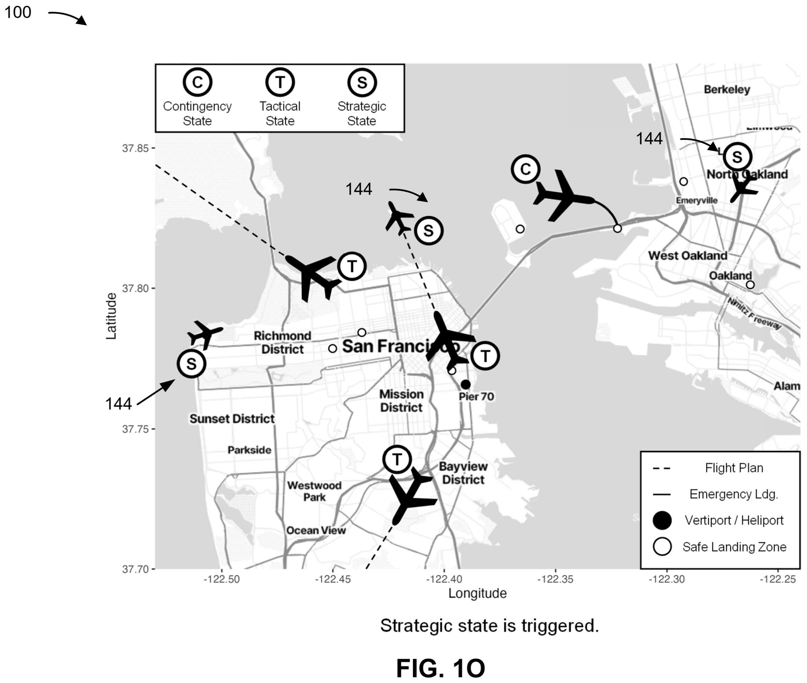

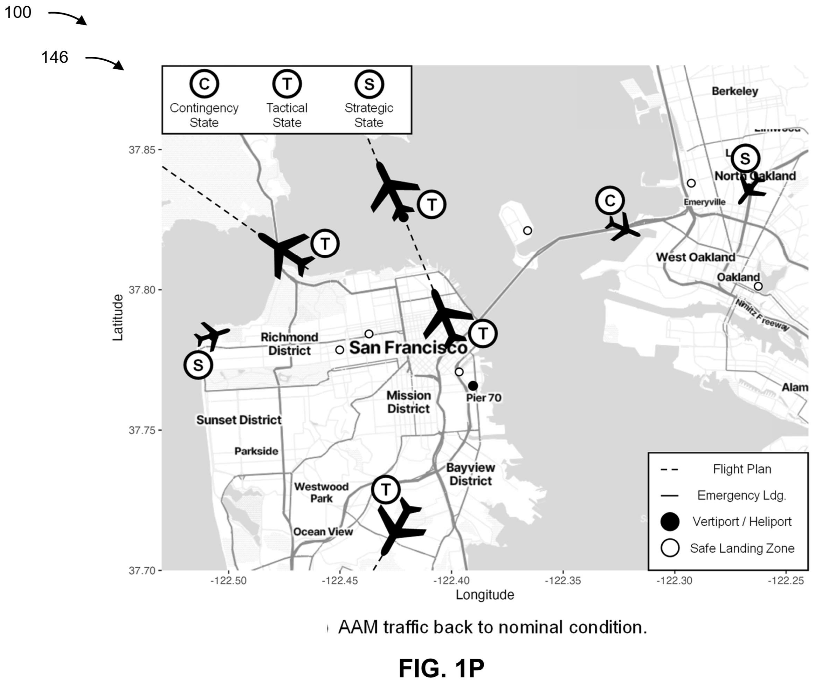

Figs. 1K-1P show an example of AAM traffic management performed by the ISCMS. Fig. 1K shows AAM traffic operating under nominal conditions. The AAM traffic includes multiple flights. As shown in Fig. 1L, and by reference number 136, a contingency event is detected in one of the flights. As shown in Fig. 1M, and by reference number 138, the flight in which the contingency event is detected is in the contingency state, and the ISCMS activates/triggers the contingency state model and uses the contingency state model to determine a contingency management action for the flight in the contingency state. As shown by reference number 140, the contingency management action for the flight is an emergency landing at the nearest possible safe landing zone. As shown in Fig. 1N, and by reference number 142, after the contingency management action is determined and triggered for the flight in the contingency state, the ISCMS activates/triggers the tactical state mode and uses the tactical state model to determine and trigger tactical management actions for flights that are in the tactical state to resolve potential conflicts between the flights in contingency state and the tactical state. As shown in Fig. 1O, and by reference number 144, once the tactical management actions are performed for the flights in the tactical state, the ISCMS activates/triggers the strategic state model and uses the strategic state model to determine and trigger strategic management actions for flights in the strategic state to resolve the rest of the potential conflicts detected between the flights in the contingency state, the tactical state, and the strategic state. As shown in Fig. 1P, and by reference number 146, after all the contingencies and potential conflicts due to contingency related activities are resolved, all the flights continue their operations under nominal conditions.

As indicated above, Figs. 1A-1P are provided as an example. Other examples may differ from what is described with regard to Figs. 1A-1P. The number and arrangement of devices shown in Figs. 1A-1P are provided as an example. In practice, there may be additional devices, fewer devices, different devices, or differently arranged devices than those shown in Figs. 1A-1P. Furthermore, two or more devices shown in Figs. 1A-1P may be implemented within a single device, or a single device shown in Figs. 1A-1P may be implemented as multiple, distributed devices. Additionally, or alternatively, a set of devices (e.g., one or more devices) shown in Figs. 1A-1P may perform one or more functions described as being performed by another set of devices shown in Figs. 1A-1P.

Figs. 2A-2D are diagrams of an example algorithms associated with operations of an ISCMS, such as the ISCMS described above in connection Figs. 1A-1P. The ISCMS is described in more detail below in connection with Fig. 3 and Fig. 4.

Fig. 2A shows an example algorithm 200 (referred to hereinafter as "Algorithm 1") for the contingency state model included in the ISCMS. As shown in Fig. 2A, Algorithm 1 inputs flight plan information, intent information, surveillance information, vertiport information, and safe landing zone information, and Algorithm 1 outputs a contingency management action for each flight in the contingency state. As shown by reference number 202, Algorithm 1 iterates over each flight in a set of flights included in the aircraft traffic. As shown by reference number 204, Algorithm 1 determines whether a flight is in the contingency state. As shown by reference number 206, if a flight is in the contingency state, Algorithm 1 determines whether the flight is in the pre-flight phase. As shown by reference number 208, if the flight is in the pre-flight phase, Algorithm 1 determines a contingency management action of performing a departure delay until the contingency is resolved for the flight. As shown by reference number 210, if a delay time of the departure delay exceeds a delay threshold (and the contingency is not yet resolved), Algorithm 1 determines a contingency management action for the flight of performing flight cancellation. As shown by reference number 212, if the flight in the contingency state is not in the pre-flight phase, Algorithm 1 determines whether the flight is in the in-flight phase. As shown by reference number 214, if the flight is in the in-flight phase, Algorithm 1 determines whether a severity of the contingency event associated with the flight is lower or equal to than a severity threshold. As shown by reference number 216, if the severity of the contingency event associated with the flight is lower than or equal to the severity threshold, Algorithm 1 determines a contingency management action of performing hovering until the contingency is resolved for the flight. As shown by reference number 218, if the hovering time exceeds (or satisfies) a threshold (e.g., a maximum time duration for hovering), Algorithm 1 initiates an emergency landing contingency action for the flight, selects a safe and feasible landing zone for the emergency landing, and determines (e.g., outputs) a contingency action for the flight of performing an emergency landing at the selected landing zone. As shown by reference number 220, if the severity of the contingency event associated with the flight exceeds the severity threshold, Algorithm 1 initiates an emergency landing contingency action for the flight, selects a safe and feasible landing zone for the emergency landing, and determines (e.g., outputs) a contingency action for the flight of performing an emergency landing at the selected landing zone.

Fig. 2B shows an example algorithm 230 (referred to hereinafter as "Algorithm 2") for the tactical state model included in the ISCMS. As shown in Fig. 2B, Algorithm 2 inputs flight plan information, intent information, surveillance information, and vertiport information, and Algorithm 2 outputs a tactical management action for flights in the tactical state for which conflicts are identified. As shown by reference number 232, Algorithm 2 iterates over each flight in a set of flights included in the aircraft traffic. As shown by reference number 234, Algorithm 2 determines whether a flight is in the tactical state (e.g., the in-flight phase). As shown by reference number 236, if the flight is in the tactical state, Algorithm 2 determines whether the flight is in the contingency state. As shown by reference number 238, if the flight is not in contingency state, Algorithm 2 checks conflicts between flights in the contingency state and flights in the tactical state. As shown by reference number 240, if any potential conflicts exist between flights in the contingency state and flights in the tactical state, Algorithm 2 selects flights for which to determine tactical management actions for conflict resolution based on energy levels associated with the flights, determines at least one of a heading adjustment, a speed adjustment, or an altitude adjustment for a tactical management action for each selected flight.

Fig. 2C shows an example algorithm 250 (referred to hereinafter as "Algorithm 3") for the strategic state model included in the ISCMS. As shown in Fig. 2C, Algorithm 3 inputs flight plan information, intent information, surveillance information, and vertiport information, and Algorithm 3 outputs a strategic management action for flights in the strategic state for which conflicts are identified. As shown by reference number 252, Algorithm 3 iterates over each flight in a set of flights included in the aircraft traffic. As shown by reference number 254, Algorithm 3 determines whether a flight is in the strategic state (e.g., the pre-flight phase). As shown by reference number 256, if the flight is in the strategic state, Algorithm 3 determines whether the flight is in the contingency state. As shown by reference number 258, if the flight is not in contingency state, Algorithm 3 checks conflicts between the flight and flights in the contingency state, flights in the tactical state, and flights in the strategic state. As shown by reference number 260, if any potential conflicts exist for the flight, Algorithm 3 determines update departure time strategic management action or a cancel flight strategic management action for the flight.

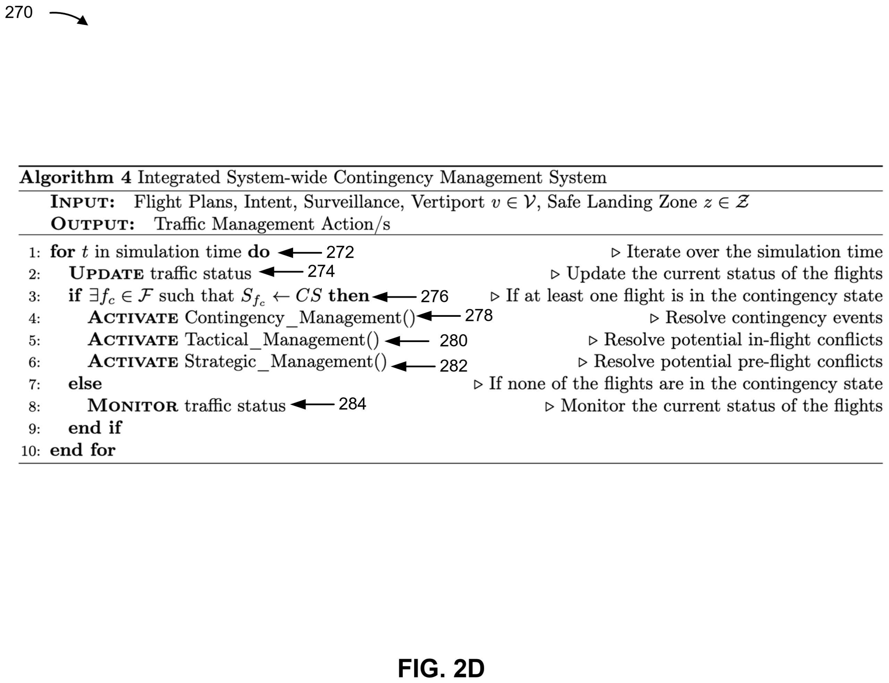

Fig. 2D shows an example algorithm 270 (referred to hereinafter as "Algorithm 4") for integrated traffic management by the ISCMS using the contingency state mode, the tactical state model, and strategic state model. As shown in Fig. 2D, Algorithm 4 inputs flight plan information, intent information, surveillance information, vertiport information, and safe landing zone information, and Algorithm 4 outputs a traffic management actions for flights. As shown by reference number 272, Algorithm 4 iterates over a simulation time. As shown by reference number 274, Algorithm 4 updates the current status of the flights at each iteration. As shown by reference number 276, Algorithm 4 detects whether any flights are in the contingency state. As shown by reference number 278, if at least one flight is in contingency state, Algorithm 4 activates the contingency management model to determine contingency management actions for flights in the contingency state to resolve contingency events. As shown by reference number 280, after determining the contingency management actions to resolve the contingency events, Algorithm 4 activates the tactical state model to determine tactical management actions for flights in the tactical state to resolve potential in-flight conflicts. As shown by reference number 282, after determining the tactical management actions to resolve the potential in-flight conflicts events, Algorithm 4 activates the strategic state model to determine strategic management actions for flights in the strategic state to resolve potential pre-flight conflicts. As shown by reference number 284, if none of the flights are in the contingency state in an iteration, Algorithm 4 monitors the current status of the flights.

As indicated above, Figs. 2A-2D are provided as an example. Other examples may differ from what is described with regard to Figs. 2A-2D.

Fig. 3 is a diagram of an example environment 300 in which systems and/or methods described herein may be implemented. As shown in Fig. 3, environment 300 includes an aircraft 310, an FMS 320, an aircraft sensor system 330, an ISCMS 340, a communication device 350, and a network 360. Devices of environment 300 may interconnect via wired connections, wireless connections, or a combination of wired and wireless connections.

The aircraft 310 includes any suitable vehicle and/or device capable of flight. The aircraft 310 may include, for example, an airplane (e.g., a jet airplane, a propeller airplane, a glider airplane, or the like), a helicopter, an unmanned or uncrewed aerial vehicle (UAV), a VTOL aircraft, an electric VTOL (eVTOL) aircraft, a remotely piloted aircraft, an autonomous aircraft, a drone, a rocketship, a spaceship, a space shuttle, an airship, or a blimp, along with other examples of aerial vehicles and/or aerial devices capable of flight.

The FMS 320 includes one or more devices capable of receiving, generating, storing, transmitting, processing, and/or providing information, as described elsewhere herein. The FMS 320 may include one or more devices, such as a flight management computer (FMC), a control display unit (CDU), and/or other devices that automate one or more of flight planning, navigation, and operational tasks of the aircraft 310. The FMS 320 may be configured to receive information indicating one or more contingency management actions, one or more tactical management actions, and/or one or more strategic management actions for a flight of the aircraft 310, as described elsewhere herein. The FMS 320 may be configured to guide or otherwise control the aircraft 310 in accordance with the one or more contingency management actions, the one or more tactical management actions, and/or the one or more strategic management actions for the flight of the aircraft 310.

The aircraft sensor system 330 includes one or more devices capable of receiving, generating, storing, transmitting, processing, detecting, and/or providing information, as described elsewhere herein. The aircraft sensor system 330 may include one or more sensors, or other devices, that are configured to monitor, measure, and report information related to an operation, environment, and/or performance of the aircraft 310. For example, the aircraft sensor system 330 may include one or more sensors, or other devices, for detecting an airspeed, a ground speed, an altitude, an attitude, a position, a bank angle, an acceleration, one or more engine performance parameters, and/or other information associated with the aircraft. The aircraft sensor system 330 may be configured to sense or detect a condition (e.g., a contingency event) or information and transmit, using a wired or wireless communication interface, an indication of the detected condition or information to the FMS 320 (e.g., in real-time, or near-real time).

The ISCMS 340 includes one or more devices capable of receiving, generating, storing, processing, and/or providing information, as described elsewhere herein. The ISCMS 340 may include a communication device and/or a computing device. For example, the ISCMS 340 may include a server, such as an application server, a client server, a web server, a database server, a host server, a proxy server, a virtual server (e.g., executing on computing hardware), or a server in a cloud computing system. In some implementations, the ISCMS 340 may include computing hardware used in a cloud computing environment, such as one or more serverless components (e.g., one or more serverless functions), among other examples. In some implementations, the ISCMS 340 may include a wireless communication device, a mobile phone, a user equipment, a laptop computer, a tablet computer, a desktop computer, or a similar type of device. The ISCMS 340 may include a communication system configured to communicate (e.g., transmit and receive information) with one or more other devices of environment 300, as described elsewhere herein. In some implementations, the ISCMS 340 may be centralized in a computing device or multiple commonly-controlled devices. In some implementations, the ISCMS 340 may be distributed or federated over multiple devices, such a computing devices and/or communication devices associated with different operators or service providers for aircraft flights. In some implementations, the ISCMS 340 may include one or more ground-based devices, one or more devices included on one or more aircrafts (e.g., the aircraft 310), or a combination of one or more ground-based devices and one or more devices included on one or more aircrafts.

The communication device 350 includes one or more devices capable of receiving, generating, storing, processing, and/or providing information, as described elsewhere herein. In some implementations, the communication device 350 may be a computing device, a server device, a wireless communication device, a mobile phone, a user equipment, a base station, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device. In some implementations, the communication device 350 may be a non-terrestrial communication device, such as a low-earth orbit (LEO) satellite, a medium-earth orbit (MEO) satellite, a geostationary earth orbit (GEO) satellite, a high elliptical orbit (HEO) satellite, or another type of satellite. The communication device 350 may communicate with one or more other devices of environment 300, as described elsewhere herein.

The network 360 includes one or more wired and/or wireless networks. For example, the network 360 may include a wireless wide area network (e.g., a cellular network or a public land mobile network), a satellite network, a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 360 enables communication among the devices of environment 300

The number and arrangement of devices and networks shown in Fig. 3 are provided as an example. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

Fig. 4 is a diagram of example components of a device 400 associated with integrated system-wide contingency management. The device 400 corresponds to one or more of the aircraft 310, the FMS 320, the aircraft sensor system 330, the ISCMS 340, and/or the communication device 350. In some implementations, the aircraft 310, the FMS 320, the aircraft sensor system 330, the ISCMS 340, and/or the communication device 350 include one or more devices 400 and/or one or more components of the device 400. In the example shown in Fig. 4, the device 400 includes a bus 410, a processor 420, a memory 430, an input component 440, an output component 450, and/or a communication component 460.

The bus 410 includes one or more components that enable wired and/or wireless communication among the components of the device 400. The bus 410 couples together two or more components of Fig. 4, such as via operative coupling, communicative coupling, electronic coupling, and/or electric coupling. For example, the bus 410 may include an electrical connection (e.g., a wire, a trace, and/or a lead) and/or a wireless bus. The processor 420 includes a central processing unit, a graphics processing unit, a microprocessor, a controller, a microcontroller, a digital signal processor, a field-programmable gate array, an application-specific integrated circuit, and/or another type of processing component. The processor 420 may be implemented in hardware, firmware, or a combination of hardware and software. In some implementations, the processor 420 includes one or more processors capable of being programmed to perform one or more operations or processes described elsewhere herein.

The memory 430 includes volatile and/or nonvolatile memory, such as random access memory (RAM), read only memory (ROM), a hard disk drive, and/or another type of memory (e.g., a flash memory, a magnetic memory, and/or an optical memory). The memory 430 may include internal memory (e.g., RAM, ROM, or a hard disk drive) and/or removable memory (e.g., removable via a universal serial bus connection). In some implementations, the memory 430 is a non-transitory computer-readable medium. The memory 430 stores information, one or more instructions, and/or software (e.g., one or more software applications) related to the operation of the device 400. In some implementations, the memory 430 includes one or more memories that are coupled (e.g., communicatively coupled) to one or more processors (e.g., processor 420), such as via the bus 410. Communicative coupling between a processor 420 and a memory 430 enables the processor 420 to read and/or process information stored in the memory 430 and/or to store information in the memory 430.

The input component 440 enables the device 400 to receive input, such as user input and/or sensed input. For example, the input component 440 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 450 enables the device 400 to provide output, such as via a display, a speaker, and/or a light-emitting diode. The communication component 460 enables the device 400 to communicate with other devices via a wired connection and/or a wireless connection. For example, the communication component 460 may include a receiver, a transmitter, a transceiver, a modem, a network interface card, and/or an antenna.

In some implementations, the device 400 performs one or more operations or processes described herein. For example, a non-transitory computer-readable medium (e.g., memory 430) may store a set of instructions (e.g., one or more instructions or code) for execution by the processor 420. The processor 420 may execute the set of instructions to perform one or more operations or processes described herein. In some implementations, execution of the set of instructions, by one or more processors 420, causes the one or more processors 420 and/or the device 400 to perform one or more operations or processes described herein. In some implementations, hardwired circuitry is used instead of or in combination with the instructions to perform one or more operations or processes described herein. Additionally, or alternatively, the processor 420 may be configured to perform one or more operations or processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

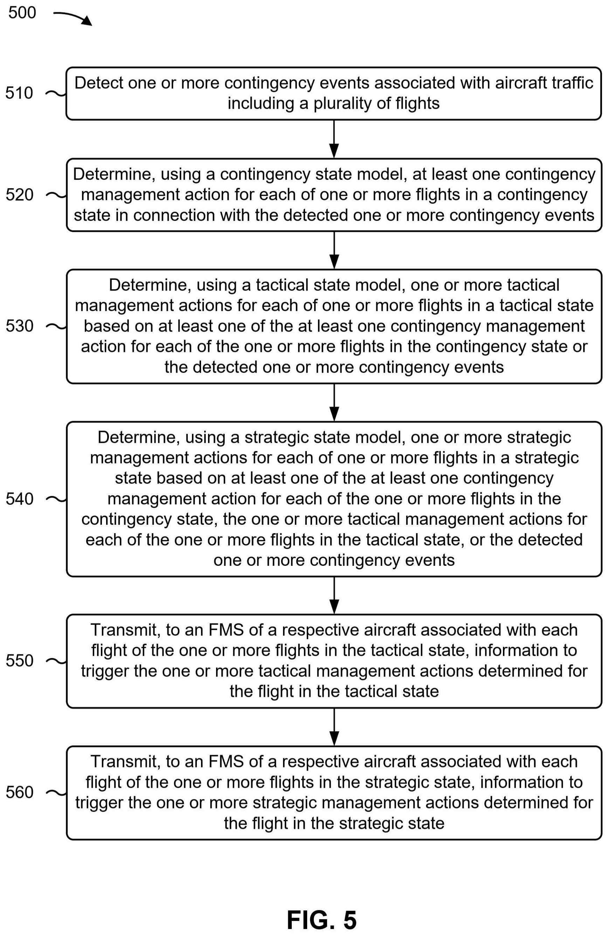

Fig. 5 is a flowchart of an example process 500 associated with integrated system-wide contingency management. One or more process blocks of Fig. 5 are performed by an ISCMS (e.g., the ISCMS 340) and/or by another device or a group of devices separate from or including the ISCMS, such as a communication device (e.g., the communication device 350), an FMS (e.g., the FMS 320) of an aircraft (e.g., the aircraft 310), and/or an aircraft sensor system (e.g., the aircraft sensor system 330). Additionally, or alternatively, one or more process blocks of Fig. 5 may be performed by one or more components of device 400, such as processor 420, memory 430, input component 440, output component 450, and/or communication component 460.

As shown in Fig. 5, process 500 comprises detecting one or more contingency events associated with aircraft traffic including a plurality of flights (block 510). For example, the ISCMS may detect one or more contingency events associated with aircraft traffic including a plurality of flights, as described above.

As further shown in Fig. 5, process 500 comprises determining, using a contingency state model, at least one contingency management action for each of one or more flights in a contingency state in connection with the detected one or more contingency events (block 520). For example, the ISCMS may determine, using a contingency state model, at least one contingency management action for each of one or more flights in a contingency state in connection with the detected one or more contingency events, as described above.

As further shown in Fig. 5, process 500 comprises determining, using a tactical state model, one or more tactical management actions for each of one or more flights in a tactical state based on at least one of the at least one contingency management action for each of the one or more flights in the contingency state or the detected one or more contingency events (block 530). For example, the ISCMS may determine, using a tactical state model, one or more tactical management actions for each of one or more flights in a tactical state based on at least one of the at least one contingency management action for each of the one or more flights in the contingency state or the detected one or more contingency events, as described above.

As further shown in Fig. 5, process 500 comprises determining, using a strategic state model, one or more strategic management actions for each of one or more flights in a strategic state based on at least one of the at least one contingency management action for each of the one or more flights in the contingency state, the one or more tactical management actions for each of the one or more flights in the tactical state, or the detected one or more contingency events (block 540). For example, the ISCMS may determine, using a strategic state model, one or more strategic management actions for each of one or more flights in a strategic state based on at least one of the at least one contingency management action for each of the one or more flights in the contingency state, the one or more tactical management actions for each of the one or more flights in the tactical state, or the detected one or more contingency events, as described above.

As further shown in Fig. 5, process 500 comprises transmitting, to an FMS of a respective aircraft associated with each flight of the one or more flights in the tactical state, information to trigger the one or more tactical management actions determined for the flight in the tactical state (block 550). For example, the ISCMS may transmit, to an FMS of a respective aircraft associated with each flight of the one or more flights in the tactical state, information to trigger the one or more tactical management actions determined for the flight in the tactical state, as described above.

As further shown in Fig. 5, process 500 comprises transmitting, to an FMS of a respective aircraft associated with each flight of the one or more flights in the strategic state, information to trigger the one or more strategic management actions determined for the flight in the strategic state (block 560). For example, the ISCMS may transmit, to an FMS of a respective aircraft associated with each flight of the one or more flights in the strategic state, information to trigger the one or more strategic management actions determined for the flight in the strategic state, as described above.

Process 500 may include additional aspects, such as any single aspect or any combination of aspects described below and/or in connection with one or more other processes described elsewhere herein.

In a first aspect, the one or more contingency events include at least one of a contingency event associated with a flight of the plurality of flights, or a contingency event associated with infrastructure supporting the aircraft traffic.

In a second aspect, alone or in combination with the first aspect, determining the at least one contingency management action for each of the one or more flights in the contingency state comprises determining the at least one contingency management action for each of the one or more flights in the contingency state based on flight plans of the one or more flights in the contingency state, information associated with the one or more flights in the contingency state, surveillance information associated with the one or more flights in the contingency state, vertiport information, airport information, or safe landing zone information.

In a third aspect, alone or in combination with one or more of the first and second aspects, determining the at least one contingency management action for each flight of the one or more flights in the contingency state comprises determining the at least one contingency management action for each flight of the one or more flights in the contingency state based on whether the flight in the contingency state is in a pre-flight state or an in-flight state.

In a fourth aspect, alone or in combination with one or more of the first through third aspects, determining the at least one contingency management action for each flight of the one or more flights in the contingency state comprises determining, for each flight of the one or more flights in the contingency state, a pre-flight contingency management action or an in-flight contingency management action based on whether the flight in the contingency state is in the pre-flight state or the in-flight state.

In a fifth aspect, alone or in combination with one or more of the first through fourth aspects, the pre-flight contingency management action comprises delaying a departure time for the flight in the contingency state, or canceling the flight in the contingency state.

In a sixth aspect, alone or in combination with one or more of the first through fifth aspects, the pre-flight contingency management action comprises delaying a departure time for the flight in the contingency state subject to a delay time threshold, and canceling the flight in the contingency state in connection with delaying the departure time for a time duration that exceeds the delay time threshold.

In a seventh aspect, alone or in combination with one or more of the first through sixth aspects, the in-flight contingency management action comprises hovering for a time duration, or an emergency landing.

In an eighth aspect, alone or in combination with one or more of the first through seventh aspects, the in-flight contingency management action comprises hovering for a time duration up to a maximum time duration, and performing an emergency landing in connection with the time duration reaching the maximum time duration.

In a ninth aspect, alone or in combination with one or more of the first through eighth aspects, process 500 comprises transmitting, to an FMS of a respective aircraft associated with each flight of the one or more flights in the contingency state, a message to trigger the at least one contingency management action determined for flight in the contingency state.

In a tenth aspect, alone or in combination with one or more of the first through ninth aspects, determining the one or more tactical management actions for each of the one or more flights in the tactical state comprises determining the one or more tactical management actions for each of the one or more flights in the tactical state based on identification of potential collisions for the one or more flights in the tactical state based on the at least one contingency management action for each of the one or more flights in the contingency state.

In an eleventh aspect, alone or in combination with one or more of the first through tenth aspects, the one or more tactical management actions comprise, a heading adjustment, a speed adjustment, or an altitude adjustment.

In a twelfth aspect, alone or in combination with one or more of the first through eleventh aspects, determining the one or more strategic management actions for each of the one or more flights in the strategic state comprises determining the one or more strategic management actions for each of the one or more flights in the strategic state based on identification of potential scheduling conflicts for the one or more flights in the strategic state based on at least one of the at least one contingency management action for each of the one or more flights in the contingency state or the one or more tactical management actions for each of the one or more flights in the tactical state.

In a thirteenth aspect, alone or in combination with one or more of the first through twelfth aspects, the one or more flights in the strategic state include one or more scheduled flights, and the strategic management actions include, for each flight of the one or more flights in the strategic state, at least one of rescheduling the flight or canceling the flight.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

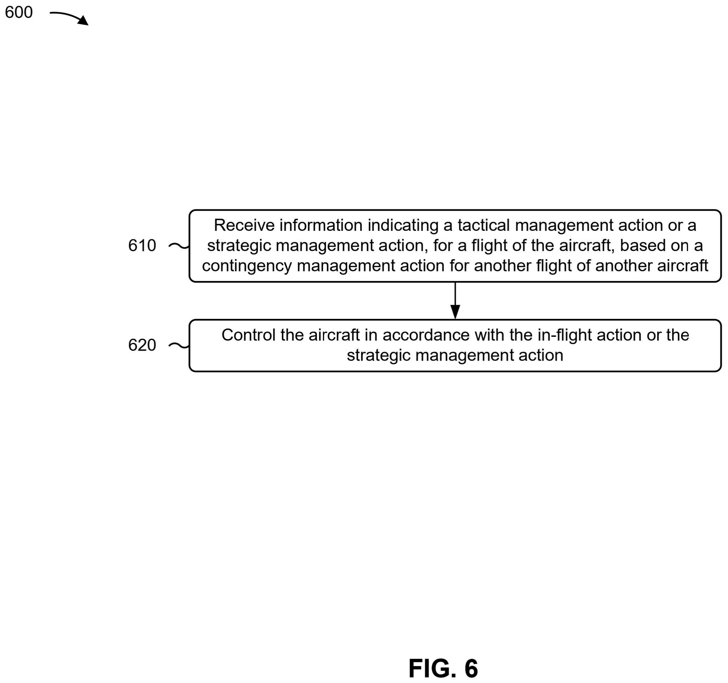

Fig. 6 is a flowchart of an example process 600 associated with integrated system-wide contingency management. One or more process blocks of Fig. 6 are performed by an FMS (e.g., the FMS 320) of an aircraft (e.g., the aircraft 310) and/or by another device or a group of devices separate from or including the FMS, such as a communication device (e.g., the communication device 350), an ISCMS (e.g., the ISCMS 340), and/or an aircraft sensor system (e.g., the aircraft sensor system 330). Additionally, or alternatively, one or more process blocks of Fig. 6 may be performed by one or more components of device 400, such as processor 420, memory 430, input component 440, output component 450, and/or communication component 460.

As shown in Fig. 6, process 600 comprises receiving information indicating a tactical management action or a strategic management action, for a flight of the aircraft, based on a contingency management action for another flight of another aircraft (block 610). For example, the FMS may receive information indicating a tactical management action or a strategic management action, for a flight of the aircraft, based on a contingency management action for another flight of another aircraft, as described above.

As further shown in Fig. 6, process 600 comprises controlling the aircraft in accordance with the tactical management action or the strategic management action (block 620). For example, the FMS may control the aircraft in accordance with the tactical management action or the strategic management action, as described above.

Process 600 may include additional aspects, such as any single aspect or any combination of aspects described below and/or in connection with one or more other processes described elsewhere herein.

In a first aspect, process 600 comprises receiving information indicating the tactical management action in connection with the flight of the aircraft being in an in-flight phase, or receiving information indicating the strategic management action in connection with the flight of the aircraft being in a pre-flight phase.

In a second aspect, alone or in combination with the first aspect, process 600 comprises controlling the aircraft to perform the adjustment to the at least one of the heading, the speed, or the altitude of the aircraft.

In a third aspect, alone or in combination with one or more of the first and second aspects, the information indicates the strategic management action, wherein the strategic management action comprises a delay to a departure time of the flight or a cancellation of the flight.

In a fourth aspect, alone or in combination with one or more of the first through third aspects, process 600 comprises receiving information indicating a contingency action in connection with a contingency associated with the flight of the aircraft, and controlling the aircraft to perform the contingency action in connection with a contingency associated with the flight of the aircraft.

Although Fig. 6 shows example blocks of process 600, in some implementations, process 600 includes additional blocks, fewer blocks, different blocks, or differently arranged blocks than those depicted in Fig. 6. Additionally, or alternatively, two or more of the blocks of process 600 may be performed in parallel.

The foregoing disclosure provides illustration and description, but is not intended to be exhaustive or to limit the implementations described herein to the precise forms that are described. Modifications and variations can be made in light of the above description or may be acquired from practice of the implementations described herein.

As used herein, the term "component" is intended to be broadly construed as hardware, firmware, and/or a combination of hardware and software. It will be apparent that systems and/or methods described herein can be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of').

The following aspects form part of the disclosure:
Clause 1. An integrated system-wide contingency management system (ISCMS), comprising:
   one or more memories;
   a contingency state model configured to determine contingency management actions for flights in a contingency state;
   a tactical state model configured to determine tactical management actions for flights in a tactical state;
   a strategic state model configured to determine strategic management actions for flights in a strategic state;
   one or more processors, communicatively coupled to the one or more memories, that are configured to:
      detect one or more contingency events associated with aircraft traffic including a plurality of flights,
      determine, using the contingency state model, at least one contingency management action for each of one or more flights in the contingency state in connection with the detected one or more contingency events,
      determine, using the tactical state model, one or more tactical management actions for each of one or more flights in a tactical state based on at least one of the at least one contingency management action for each of the one or more flights in the contingency state or the detected one or more contingency events, and
      determine, using the strategic state model, one or more strategic management actions for each of one or more flights in a strategic state based on at least one of the at least one contingency management action for each of the one or more flights in the contingency state, the one or more tactical management actions for each of the one or more flights in the tactical state, or the detected one or more contingency events; and a communication system configured to:
         transmit, to a flight management system (FMS) of a respective aircraft associated with each flight of the one or more flights in the tactical state, information to trigger the one or more tactical management actions determined for the flight in the tactical state, and
         transmit, to an FMS of a respective aircraft associated with each flight of the one or more flights in the strategic state, information to trigger the one or more strategic management actions determined for the flight in the strategic state.
Clause 2. The ISCMS of clause 1, wherein the one or more contingency events include at least one of:
   a contingency event associated with a flight of the plurality of flights, or
   a contingency event associated with infrastructure supporting the aircraft traffic.
Clause 3. The ISCMS of any preceding clause, especially clause 1, wherein the one or more processors are further configured to determine the at least one contingency management action for each of the one or more flights in the contingency state based on:
   flight plans of the one or more flights in the contingency state,
   intent information associated with the one or more flights in the contingency state,
   surveillance information associated with the one or more flights in the contingency state,
   vertiport information,
   airport information, or
   safe landing zone information.
Clause 4. The ISCMS of any preceding clause, especially clause 1, wherein the one or more processors are further configured to determine the at least one contingency management action for each flight of the one or more flights in the contingency state based on whether the flight in the contingency state is in a pre-flight state or an in-flight state.
Clause 5. The ISCMS of clause 4, wherein the one or more processors are further configured, to determine, for each flight of the one or more flights in the contingency state, a pre-flight contingency management action or an in-flight contingency management action based on whether the flight in the contingency state is in the pre-flight state or the in-flight state.
Clause 6. The ISCMS of clause 5, wherein the pre-flight contingency management action comprises:
   delaying a departure time for the flight in the contingency state, or
   canceling the flight in the contingency state.
Clause 7. The ISCMS of clause 5 or 6, wherein the pre-flight contingency management action comprises:
   delaying a departure time for the flight in the contingency state subject to a delay time threshold, and
   canceling the flight in the contingency state in connection with delaying the departure time for a time duration that exceeds the delay time threshold.
Clause 8. The ISCMS of any of clauses 5 to 7, wherein the in-flight contingency management action comprises:
   hovering for a time duration, or
   an emergency landing.
Clause 9. The ISCMS of any of clauses 5 to 8, wherein the in-flight contingency management action comprises:
   hovering for a time duration up to a maximum time duration, and
   performing an emergency landing in connection with the time duration reaching the maximum time duration.
Clause 10. The ISCMS of any preceding clause, especially clause 1, wherein the communication system is further configured to:
   transmit, to an FMS of a respective aircraft associated with each flight of the one or more flights in the contingency state, a message to trigger the at least one contingency management action determined for flight in the contingency state.
Clause 11. The ISCMS of any preceding clause, especially clause 1, wherein the one or more processors are further configured to determine the one or more tactical management actions for each of the one or more flights in the tactical state based on identification of potential collisions for the one or more flights in the tactical state based on the at least one contingency management action for each of the one or more flights in the contingency state.
Clause 12. The ISCMS of clause 11, wherein the one or more tactical management actions comprise, a heading adjustment, a speed adjustment, or an altitude adjustment.
Clause 13. The ISCMS of any preceding clause, especially clause 1, wherein the one or more processors are further configured to determine the one or more strategic management actions for each of the one or more flights in the strategic state based on identification of potential scheduling conflicts for the one or more flights in the strategic state based on at least one of the at least one contingency management action for each of the one or more flights in the contingency state or the one or more tactical management actions for each of the one or more flights in the tactical state.
Clause 14. The ISCMS of clause 13, wherein the one or more flights in the strategic state include one or more scheduled flights, and wherein the strategic management actions include, for each flight of the one or more flights in the strategic state, at least one of rescheduling the flight or canceling the flight.
Clause 15. A flight management system (FMS) of an aircraft, comprising:
   one or more memories; and
   one or more processors, communicatively coupled to the one or more memories, configured to:
      receive information indicating a tactical management action or a strategic management action, for a flight of the aircraft, based on a contingency management action for another flight of another aircraft; and
      control the aircraft in accordance with the tactical management action or the strategic management action.
Clause 16. The FMS of clause 15, wherein the one or more processors, to receive the information, are configured to:
   receive information indicating the tactical management action in connection with the flight of the aircraft being in an in-flight phase; or
   receive information indicating the strategic management action in connection with the flight of the aircraft being in a pre-flight phase.
Clause 17. The FMS of clause 15 or 16, wherein the information indicates the tactical management action, wherein the tactical management action includes an adjustment to at least one of a heading, a speed, or an altitude of the aircraft, and wherein the one or more processors, to control the aircraft, are configured to:
   control the aircraft to perform the adjustment to the at least one of the heading, the speed, or the altitude of the aircraft.
Clause 18. The FMS of any of clauses 15 to 17, wherein the information indicates the strategic management action, wherein the strategic management action includes a delay to a departure time of the flight or a cancellation of the flight.
Clause 19. The FMS of any of clauses 15 to 18, wherein the one or more processors are further configured to:
   receive information indicating a contingency action in connection with a contingency associated with the flight of the aircraft; and
   control the aircraft to perform the contingency action in connection with a contingency associated with the flight of the aircraft.
Clause 20. A system, comprising:
   integrated system-wide contingency management system (ISCMS), comprising:
      one or more memories;
      a contingency state model configured to determine contingency management actions for flights in a contingency state;
      a tactical state model configured to determine tactical management actions for flights in a tactical state;
      a strategic state model configured to determine strategic management actions for flights in a strategic state;
      one or more processors, communicatively coupled to the one or more memories, that are configured to:
         detect one or more contingency events associated with aircraft traffic including a plurality of flights,
         determine, using the contingency state model, at least one contingency management action for each of one or more flights in the contingency state in connection with the detected one or more contingency events,
         determine, using the tactical state model, one or more tactical management actions for each of one or more flights in a tactical state based on at least one of the at least one contingency management action for each of the one or more flights in the contingency state or the detected one or more contingency events, and
         determine, using the strategic state model, one or more strategic management actions for each of one or more flights in a strategic state based on at least one of the at least one contingency management action for each of the one or more flights in the contingency state, the one or more tactical management actions for each of the one or more flights in the tactical state, or the detected one or more contingency events; and
      a communication system configured to:
         transmit information indicating a tactical management action determined for a flight in the tactical state, and
         transmit information indicating a strategic management action determined for a flight in the strategic state; and
   a flight management system (FMS) of an aircraft configured to:
      receive the information indicating the tactical management action or the information indicating the strategic management action, and
      control the aircraft in accordance with the tactical management action or the strategic management action.

## Claims

1. An integrated system-wide contingency management system, ISCMS, (340), comprising:
one or more memories (430);
a contingency state model configured to determine contingency management actions for flights in a contingency state;
a tactical state model configured to determine tactical management actions for flights in a tactical state;
a strategic state model configured to determine strategic management actions for flights in a strategic state;
one or more processors (420), communicatively coupled to the one or more memories (430), that are configured to:
detect one or more contingency events associated with aircraft traffic including a plurality of flights,
determine, using the contingency state model, at least one contingency management action for each of one or more flights in the contingency state in connection with the detected one or more contingency events,
determine, using the tactical state model, one or more tactical management actions for each of one or more flights in a tactical state based on at least one of the at least one contingency management action for each of the one or more flights in the contingency state or the detected one or more contingency events, and
determine, using the strategic state model, one or more strategic management actions for each of one or more flights in a strategic state based on at least one of the at least one contingency management action for each of the one or more flights in the contingency state, the one or more tactical management actions for each of the one or more flights in the tactical state, or the detected one or more contingency events; and a communication system (460) configured to:
transmit, to a flight management system, FMS, (320) of a respective aircraft (310) associated with each flight of the one or more flights in the tactical state, information to trigger the one or more tactical management actions determined for the flight in the tactical state, and
transmit, to an FMS (320) of a respective aircraft (310) associated with each flight of the one or more flights in the strategic state, information to trigger the one or more strategic management actions determined for the flight in the strategic state.

2. The ISCMS (340) of claim 1, wherein the one or more contingency events include at least one of:
a contingency event associated with a flight of the plurality of flights, or
a contingency event associated with infrastructure supporting the aircraft traffic.

3. The ISCMS (340) of of any preceding claim, wherein the one or more processors (420) are further configured to determine the at least one contingency management action for each of the one or more flights in the contingency state based on:
flight plans of the one or more flights in the contingency state,
intent information associated with the one or more flights in the contingency state,
surveillance information associated with the one or more flights in the contingency state,
vertiport information,
airport information, or
safe landing zone information.

4. The ISCMS (340) of of any preceding claim, wherein the one or more processors (420) are further configured to determine the at least one contingency management action for each flight of the one or more flights in the contingency state based on whether the flight in the contingency state is in a pre-flight state or an in-flight state.

5. The ISCMS (340) of claim 4, wherein the one or more processors (420) are further configured, to determine, for each flight of the one or more flights in the contingency state, a pre-flight contingency management action or an in-flight contingency management action based on whether the flight in the contingency state is in the pre-flight state or the in-flight state.

6. The ISCMS (340) of claim 5, wherein the pre-flight contingency management action comprises:
delaying a departure time for the flight in the contingency state, or
canceling the flight in the contingency state.

7. The ISCMS (340) of claim 5 or 6, wherein the pre-flight contingency management action comprises:
delaying a departure time for the flight in the contingency state subject to a delay time threshold, and
canceling the flight in the contingency state in connection with delaying the departure time for a time duration that exceeds the delay time threshold.

8. The ISCMS (340) of any of claims 5 to 7, wherein the in-flight contingency management action comprises:
hovering for a time duration, or
an emergency landing.

9. The ISCMS (340) of any of claims 5 to 8, wherein the in-flight contingency management action comprises:
hovering for a time duration up to a maximum time duration, and
performing an emergency landing in connection with the time duration reaching the maximum time duration.

10. The ISCMS (340) of of any preceding claim, wherein the communication system (460) is further configured to:
transmit, to an FMS (320) of a respective aircraft (310) associated with each flight of the one or more flights in the contingency state, a message to trigger the at least one contingency management action determined for flight in the contingency state.

11. The ISCMS (340) of of any preceding claim, wherein the one or more processors (420) are further configured to determine the one or more tactical management actions for each of the one or more flights in the tactical state based on identification of potential collisions for the one or more flights in the tactical state based on the at least one contingency management action for each of the one or more flights in the contingency state.

12. The ISCMS (340) of claim 11, wherein the one or more tactical management actions comprise, a heading adjustment, a speed adjustment, or an altitude adjustment.

13. The ISCMS (340) of any preceding claim, wherein the one or more processors (420) are further configured to determine the one or more strategic management actions for each of the one or more flights in the strategic state based on identification of potential scheduling conflicts for the one or more flights in the strategic state based on at least one of the at least one contingency management action for each of the one or more flights in the contingency state or the one or more tactical management actions for each of the one or more flights in the tactical state.

14. The ISCMS (340) of claim 13, wherein the one or more flights in the strategic state include one or more scheduled flights, and wherein the strategic management actions include, for each flight of the one or more flights in the strategic state, at least one of rescheduling the flight or canceling the flight.

15. A system, comprising:
integrated system-wide contingency management system (340) according to any preceding claim, and
a flight management system (320) of an aircraft (310) configured to:
receive the information indicating the tactical management action or the information indicating the strategic management action, and
control the aircraft (310) in accordance with the tactical management action or the strategic management action.
